(19) Europäisches Patentamt
European Patent Office
Office européen des brevets

(11) **EP 2 150 090 B1**

(12) **FASCICULE DE BREVET EUROPEEN**

(45) Date de publication et mention
de la délivrance du brevet:
**02.11.2011 Bulletin 2011/44**

(51) Int Cl.:
***H04W 88/08*** *(2009.01)*

(21) Numéro de dépôt: **09290585.0**

(22) Date de dépôt: **24.07.2009**

(54) **Terminal multimode à connextions optimisées**

Multimode-Endgerät zur optimierten Verbindung

Multimode terminal with optimized connections

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.07.2008 FR 0804353**

(43) Date de publication de la demande:
**03.02.2010 Bulletin 2010/05**

(73) Titulaire: **Societé Française du Radiotéléphone**
**75008 Paris (FR)**

(72) Inventeurs:
• **Bruzzone, Raoul**
**78280 Guyancourt (FR)**
• **Lebas, Stéphanie**
**92700 Colombes (FR)**
• **Marsot, Rodolphe**
**38000 Grenoble (FR)**

(74) Mandataire: **Debay, Yves**
**Cabinet Debay**
**126 Elysée 2**
**78170 La Celle Saint Cloud (FR)**

(56) Documents cités:
**US-A1- 2003 114 158     US-A1- 2008 039 087**
**US-A1- 2008 076 393**

**Description**

Le domaine de la présente invention est celui des télécommunications. Plus particulièrement, il s'agit d'un dispositif de gestion des communications dans un terminal capable de communiquer par plusieurs réseaux.

Les réseaux de communication par ondes radiofréquence couvrent des zones communes et des zones complémentaires les unes des autres. L'évolution technologique par exemple des différents réseaux cellulaires, s'est accompagnée d'un développement des terminaux mobiles multimodes capables de communiquer sur plusieurs réseaux. Un terminal mobile pouvant communiquer par le réseau UMTS (Universal Mobile Telecommunications System) également appelé 3G, est aussi capable de communiquer par le réseau GPRS (General Packet Radio Service) ou 2,5G et par le réseau GSM (Global System for Mobile communications) ou 2G. Un procédé de transfert entre deux cellules, également appelé « handover » permet par exemple lors d'une communication, de passer d'une cellule radio à une autre dans un même réseau ou permet de passer d'un réseau à un autre. Le « handover » permet de gérer la continuité dans la transmission de données, par exemple pour les données de type voix, de type texte, de type multimédia ou d'autres types de données transférées. Un dispositif de gestion des connexions, également appelé « connection manager », intégré dans un terminal mobile, permet par exemple de sélectionner un réseau parmi plusieurs réseaux disponibles. Un exemple se trouve dans: US 2003/114158.

Cependant les solutions actuelles de dispositifs de gestion des connexions ou les solutions de « hand over » entre réseaux telles que UMA ou Mobile IP, se contentent généralement de traiter les problèmes de connexion, par exemple à Internet, par la gestion des couches de protocoles au niveau TCP/IP ou inférieures et ne prennent pas en compte l'ensemble des spécificités de fonctionnement au niveau de la couche applicative. Un dispositif de gestion des connexions existant peut par exemple basculer d'un premier réseau vers un second réseau tandis qu'un applicatif incompatible avec le second réseau est exécuté. Cet applicatif se place alors dans un état bloqué ou un état d'erreur, puis même si le dispositif de gestion des connexions rebascule vers le premier réseau compatible avec cet applicatif, l'applicatif ne peut pas sortir de l'état bloqué ou d'erreur sans une intervention par exemple de l'utilisateur. Un navigateur Internet installé sur un terminal mobile sera par exemple limité à des accès Internet via un réseau local Wi-Fi ou éventuellement via le réseau cellulaire UMTS, selon le type d'abonnement souscrit par l'utilisateur. Une application de consultation de courriers électroniques sera par exemple limitée aux connexions sécurisées après authentification telles que les communications par le réseau UMTS ou GPRS, tandis que son fonctionnement par un réseau Wi-Fi public non protégé sera empêché. De plus selon le type de réseau utilisé, un utilisateur disposera de plus ou moins de ressources disponibles en terme de vitesse de transfert et d'occupation des ressources radio.

Il existe donc un besoin pour les terminaux utilisant les dispositifs de gestion des connexions d'accorder en temps réel les états des applicatifs en cours d'exécution dans le terminal mobile d'une part avec les états des connexions établies par le terminal mobile et d'autre part avec le plan tarifaire adopté par le client, de façon à améliorer la qualité d'utilisation pour avoir un réseau dont la vitesse de transfert, la sécurité et le coût d'utilisation sont adaptés à l'applicatif utilisant ces ressources, tout en optimisant les utilisations des ressources des différents réseaux.

La présente invention a pour objet de supprimer un ou plusieurs des inconvénients de l'art antérieur en proposant, dans un terminal mobile, un dispositif de gestion d'un ou plusieurs canaux de communication pour un ou plusieurs applicatifs du terminal mobile permettant d'améliorer la qualité d'utilisation pour avoir un réseau dont la vitesse de transfert, la sécurité et le coût d'utilisation sont adaptés à l'applicatif utilisant ces ressources, tout en optimisant les utilisations des ressources des différents réseaux..

Cet objectif est atteint grâce à un terminal mobile comprenant des composants de communication avec l'extérieur du terminal mobile et un dispositif de gestion des connexions qui comprend un module de création ou de suppression de canaux de communication entre l'extérieur du terminal mobile et au moins un applicatif interne au terminal mobile, les canaux établis via plusieurs couches de protocoles étant commandés par le dispositif de gestion, **caractérisé en ce qu'**il comprend un bus logiciel de gestion prédéterminé en communication d'une part avec une interface du dispositif de gestion et d'autre part avec une interface dudit applicatif,
une pluralité de messages relatifs aux canaux de communication, étant transmis entre le dispositif de gestion et ledit applicatif, dont au moins un message d'enregistrement envoyé au dispositif de gestion et comprenant un identifiant dudit applicatif et des données représentatives d'un ou plusieurs types de canaux de communication déterminés compatibles avec ledit applicatif,
une table de priorité mémorisant l'identifiant dudit applicatif et le ou les types de canaux associés à chacun desquels un niveau de priorité mémorisé est associé,
le dispositif de gestion comprenant un module d'attribution d'un des canaux établis audit applicatif, le canal attribué audit applicatif correspondant à un des types de canaux associés audit applicatif dans la table de priorité.

Selon une autre particularité, le niveau de priorité associé à chacun des canaux associés à chaque applicatif dans la table, est attribué par défaut par le dispositif de gestion ou est attribué en fonction du message d'enregistrement qui comprend le niveau de priorité associé à chaque type de canal ou des données de calcul du niveau de priorité associé à chaque type de canal.

Selon une autre particularité, ledit applicatif comprend un module d'enregistrement, ou respectivement de désenregistrement, permettant son enregistrement, ou respectivement son désenregistrement, auprès du dispositif de gestion au moment d'une activation, ou respectivement d'une désactivation, de cet applicatif ou le module d'enregistrement de l'applicatif réalise son enregistrement auprès du dispositif de gestion au moment d'une installation de cet applicatif dans le terminal mobile.

Selon une autre particularité, le module d'attribution comprend un module d'initialisation et de mise à jour de données mémorisées représentatives d'indices de performance de chacun des canaux créés, les indices de performance comprenant :

- un paramètre de temps de réponse pour une consultation d'une ressource distante via ce canal de communication ou
- un paramètre d'indice de qualité égal à l'inverse du temps de réponse ou
- un paramètre de consommation d'énergie nécessaire pour la consultation de la ressource distante via ce canal de communication ou
- un paramètre de rapport de l'indice de qualité par la consommation d'énergie,

une comparaison selon au moins un paramètre, des indices de performance de plusieurs canaux disponibles compatibles avec ledit applicatif, permettant une pondération proportionnelle aux indices de performance, des niveaux de priorité, pour déterminer le canal ayant le niveau de priorité pondéré le plus élevé qui est alors attribué audit applicatif.

Selon une autre particularité, chacun des canaux créés ayant au moins un état parmi une pluralité d'états possibles à savoir :

- un état de transaction dans lequel des messages peuvent être échangés avec l'extérieur du terminal mobile, suivant
- un état d'association dans lequel des données d'adressage dans un réseau sont mémorisées en association avec des données d'identification de matériel, suivant
- un état d'authentification dans lequel des messages d'authentification sont échangés, suivant
- un état de balayage dans lequel des points d'accès ou des stations de liaison radiofréquence du canal sont détectées, suivant
- un état de désauthentification, suivant
- un état de désassociation, suivant l'état de transaction,

une mise à jour des indices de performance relatifs à un canal est réalisée à chaque changement d'état de ce canal.

Selon une autre particularité, les indices de performance sont calculés par des délais mémorisés et des dépenses d'énergie mémorisées correspondant à des maintiens dans les états successifs et à des sauts entre les états successifs, d'un état en cours jusqu'à la terminaison de l'état de transaction après laquelle la consultation de la ressource distante est validée.

Selon une autre particularité, les délais et les dépenses d'énergie correspondant aux maintiens dans les états successifs et aux sauts entre les états successifs, sont mesurés et mémorisés par un module de test lors d'une phase de test de chaque canal créé.

Selon une autre particularité, le dispositif de gestion comprend un module d'optimisation des canaux qui règle les états des canaux au plus proche de l'état de transaction ou qui maintient un ou plusieurs canaux à l'état de transaction, l'état de transaction étant maintenu par des envois périodiques de commandes de maintien actif telles que la commande « keep alive », en cas d'inactivité sur le canal maintenu dans l'état de transaction.

Selon une autre particularité, les types de canaux de communication compatibles avec ledit applicatif, sont chacun associés à leur niveau de priorité mémorisé dans la table de priorité du dispositif de gestion, chaque niveau de priorité correspondant à au moins :

- un mode de fonctionnement optimum de l'applicatif correspondant à une priorité la plus élevée pour l'attribution de ce type de canal par le module d'attribution ou
- un mode de fonctionnement dégradé de l'applicatif correspondant à une priorité moyenne pour l'attribution de ce type de canal par le module d'attribution ou
- un mode de fonctionnement minimum correspondant à une priorité la plus basse pour l'attribution de ce type de canal par le module d'attribution,

le dispositif de gestion renvoyant, en réponse au message d'enregistrement, une réponse de branchement à un canal déterminé selon un mode optimum, un mode dégradé ou un mode minimum relativement aux types de canaux demandés ou une réponse de branchement impossible à un canal,

le dispositif de gestion transmettant audit applicatif, des commandes de basculement vers un autre canal permettant d'améliorer le mode de communication dégradé ou minimum dudit applicatif, suite à une modification des états des canaux établis par le terminal mobile.

Selon une autre particularité, le dispositif de gestion comprend un module de localisation comprenant des données représentatives d'au moins un point de connexion au réseau associé à l'identifiant mémorisé dudit applicatif, le module de localisation réalisant un contrôle des canaux dans l'état de transaction et transmettant au module d'attribution, à la détection de ce point de connexion dans un des canaux dans l'état de transaction, une commande de basculement des communications de l'applicatif associé, via ce canal.

Selon une autre particularité, le dispositif de gestion comprend un module de tarification comprenant des données représentatives d'au moins un réseau de communication déterminé associé à :

- l'identifiant mémorisé d'un utilisateur du terminal mobile ou
- un compteur d'usage ou
- un seuil maximum du compteur d'usage.

Selon une autre particularité, un module d'incrémentation du compteur d'usage est activé à la réception d'un message de confirmation de branchement au réseau par ledit applicatif, le module d'incrémentation est désactivé à la réception d'un message de confirmation de débranchement du réseau par ledit applicatif, ces messages de confirmation étant envoyés par l'applicatif, le module de tarification déclenchant, à la détection d'une valeur du compteur d'usage atteignant ou dépassant le seuil maximum, la transmission au module d'attribution d'une commande de débranchement du canal associé au compteur d'usage, le seuil maximum et le compteur d'usage étant initialisé ou mis à jour en fonction de données mémorisées représentatives d'un abonnement de l'utilisateur.

Un autre objet de la présente invention est de proposer un procédé de gestion des communications, dans un terminal mobile, par un dispositif de gestion d'un ou plusieurs canaux de communication pour un ou plusieurs applicatifs du terminal mobile permettant d'améliorer la qualité d'utilisation pour avoir un réseau dont la vitesse de transfert, la sécurité et le coût d'utilisation sont adaptés à l'applicatif utilisant ces ressources, tout en optimisant les utilisations des ressources des différents réseaux.

Cet objectif est atteint grâce à un procédé de gestion des communications dans un terminal mobile comprenant des composants de communication avec l'extérieur du terminal mobile et un dispositif de gestion des connexions qui comprend un module de création ou de suppression de canaux de communication entre l'extérieur du terminal mobile et au moins un applicatif interne au terminal mobile, les canaux établis via plusieurs couches de protocoles étant commandés par le dispositif de gestion, **caractérisé en ce qu'**il comprend :

- une étape d'envoi d'une requête d'enregistrement auprès du dispositif de gestion par un module d'enregistrement dudit applicatif, la requête d'enregistrement, envoyée via un bus logiciel de gestion prédéterminé en communication d'une part avec une interface du dispositif de gestion et d'autre part avec une interface dudit applicatif, comprenant un identifiant dudit applicatif et des données représentatives d'un ou plusieurs types de canaux de communication déterminés compatibles avec ledit applicatif,
- une étape d'enregistrement, dans une table de priorité, de l'identifiant dudit applicatif et du ou des types de canaux associés à chacun desquels un niveau de priorité mémorisé est associé,
- une étape de réponse à la requête d'enregistrement par un module d'attribution d'un des canaux établis audit applicatif, le canal attribué audit applicatif correspondant à un des types de canaux associés audit applicatif dans la table de priorité.

Selon une autre particularité, le module d'attribution comprenant un module d'initialisation et de mise à jour de données mémorisées représentatives d'indices de performance de chacun des canaux créés, les indices de performance comprenant :

- un paramètre de temps de réponse pour une consultation d'une ressource distante via ce canal de communication ou
- un paramètre d'indice de qualité égal à l'inverse du temps de réponse ou
- un paramètre de consommation d'énergie nécessaire pour la consultation de la ressource distante via ce canal de communication ou
- un paramètre de rapport de l'indice de qualité par la consommation d'énergie,

le procédé comprend une étape de pondération par au moins un paramètre des indices de performances de plusieurs canaux disponibles compatibles avec ledit applicatif, permettant une comparaison des niveaux de priorité pondérés pour déterminer le canal de niveau de priorité pondéré le plus haut, attribué audit applicatif.

Selon une autre particularité, chacun des canaux créés ayant au moins un état parmi une pluralité d'états possibles dont un état de transaction dans lequel des messages peuvent être échangés avec l'extérieur du terminal mobile, suivant un état d'association dans lequel des données d'adressage dans un réseau sont mémorisées en association avec des données d'identification de matériel, suivant un état d'authentification dans lequel des messages d'authentification sont échangés, suivant un état de balayage dans lequel des points d'accès ou des stations de liaison radiofréquence du canal sont détectées, suivant un état de désauthentification, suivant un état de désassociation, suivant l'état de transaction, le procédé comprend :

- une étape de mesure et de mémorisation, par un module de test, de délais et de dépenses d'énergie correspondant aux maintiens dans les états successifs et aux sauts entre les états successifs,
- une étape de calcul et de mise à jour des indices de performance par sommation des délais ou des dépenses d'énergie, d'un état en cours jusqu'à la terminaison de l'état de transaction après laquelle une consultation d'une ressource distante est validée.

L'invention, ses caractéristiques et ses avantages apparaîtront plus clairement à la lecture de la description faite en référence aux figures référencées ci-dessous et données à titre d'exemples non limitatifs :

- la figure 1 représente un exemple d'architecture matériel d'un terminal mobile ;
- la figure 2 représente un exemple de configuration d'un terminal selon l'invention ;
- la figure 3 représente un exemple de procédé exécuté par le terminal mobile lors du démarrage d'une session ;
- la figure 4 représente un exemple d'états successifs d'un terminal mobile multimode ;
- la figure 5 représente un exemple de procédé de mise à jour d'indicateurs de contrôle d'une connexion du terminal mobile,
- la figure 6 représente un tableau de données de délais et de dépenses d'énergie successifs pour les différents états successifs d'un canal déterminé,
- la figure 7 représente un exemple de tableau de définition de commandes envoyées par le module de gestion des connexions ou par un applicatif interne au terminal mobile,
- la figure 8 représente un exemple de tableau de définition de réponses aux commandes, envoyées par l'applicatif interne ou par le module de gestion des connexions,
- la figure 9 représente un exemple de procédé d'enregistrement d'un applicatif auprès du module de gestion des connexions selon l'invention,
- la figure 10 représente un exemple de module d'adressage,
- la figure 11 représente un exemple de module de localisation,
- la figure 12 représente un exemple de module de tarification,
- la figure 13 représente un exemple de module de priorité.

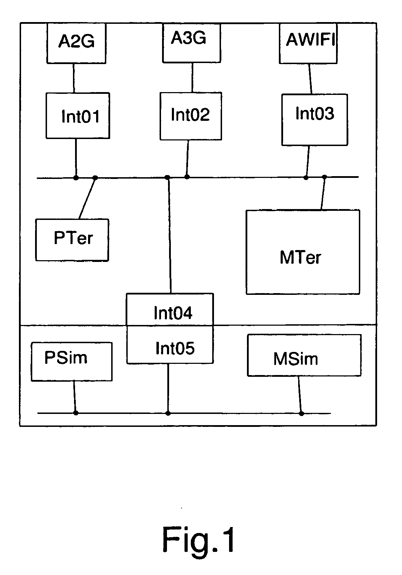

L'invention va à présent être décrite en référence aux figures précédemment citées. Le terminal mobile, comme représenté à la figure 1, comprend des composants de communication permettant une connexion avec différents réseaux. Le terminal comprend par exemple une antenne (A2G) et une interface (Int01) de connexion au réseau 2G, une antenne (A3G) et une interface (Int02) de connexion au réseau 3G et une antenne (AWIFI) et une interface (Int03) de connexion au réseau Wi-Fi. Le terminal peut aussi comprendre un composant de communication avec :

- le réseau 2,5G ou
- le réseau 3,5G ou
- le réseau WIMAX ou
- un autre type de réseau de communication tel que le réseau Internet ou un réseau local de communication par ondes radiofréquences ou un réseau câblé de type Ethernet ou un réseau mobile accédé par une clé électronique telle qu'un « dongle » 3G USB (Universal Serial Bus).

Chaque antenne (A2G, A3G, AWIFI) est par exemple reliée à son composant (Int01, Int02, Int03) d'interface en communication avec un bus du terminal, relié à une mémoire (Mter) du terminal et à un composant de traitement (PTer) du terminal, comme par exemple un microprocesseur ou un microcontrôleur. Une interface (Int04) avec un objet d'identification électronique sécuritaire tel qu'une carte SIM, est par exemple reliée au bus du terminal mobile. L'objet sécuritaire comprend par exemple une interface (Int05) interne de connexion au terminal. Cette interface (Int05) interne est par exemple reliée par un bus à un composant (PSim) de traitement du composant électronique sécuritaire et à un composant (MSim) de mémorisation du composant sécuritaire.

Des modules ou applicatifs actifs sont par exemple réalisés chacun par un programme mémorisé et exécuté par un composant de traitement pour réaliser une ou plusieurs fonctions déterminées. On comprend que les programmes de traitement du terminal ou du composant électronique sécuritaire sont dotés d'au moins un sous-programme qui permet de mémoriser tous les résultats intermédiaires, obtenus successivement lors du traitement, par exemple à l'aide de tables de mémorisation. Différents algorithmes de calcul sont respectivement utilisés par des modules de calcul agencés pour récupérer les informations adéquates (portions de données ou de signaux en cours de traitement, résultats d'opérations précédentes, etc.). Ainsi les modules actifs, correspondant à des applicatifs exécutés de façon interne au terminal mobile, peuvent communiquer avec différents réseaux, via les composants de communication.

De manière non limitative, les applicatifs peuvent être installés dans le terminal mobile et enregistrés auprès du dispositif de gestion des canaux et des connexions, lors de leur installation ou lors de leur activation. Les applicatifs peuvent aussi être réalisés sous la forme de scripts comprenant une série d'instructions, un script étant exécuté par un interpréteur comme par exemple :

- un interpréteur Flash,
- un interpréteur Python,
- un interpréteur Java,
- un interpréteur Javascript,
- ou d'autres interpréteurs.

L'interpréteur comprend notamment des fonctions ou des primitives de communication avec le gestionnaire de communication (ACM1), via un bus logiciel prédéterminé de communication.

Un navigateur Internet peut aussi être considéré comme un interpréteur et comprend des fonctions ou des primitives de communication avec le gestionnaire de communication (ACM1), via le bus logiciel prédéterminé de communication.

De manière non limitative, les fonctions ou primitives de communication avec le gestionnaire de communication (ACM1), via le bus logiciel prédéterminé de communication, sont intégrées nativement dans l'interpréteur ou le navigateur ou sont installées par des mises à jour, par exemple en installant un « service pack » ou un « plugin ». Un « service pack » est par exemple également désigné par ensemble de mises à jour dédiées et un « plugin » est par exemple également désigné par logiciel greffon.

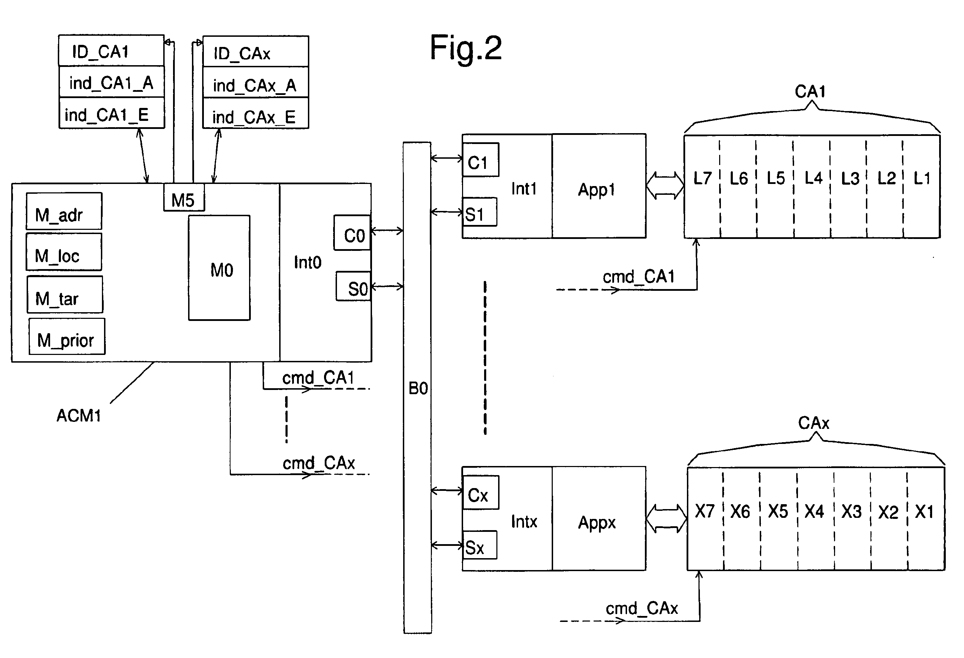

Les applicatifs (App1, Appx) exécutés dans le terminal ou dans le composant électronique sécuritaire, communiquent avec un ou plusieurs réseaux de communication, par l'intermédiaire de plusieurs couches de protocoles de communication, telles que par exemple les couches (L1, X1, L2, X2, L3, X3, L4, X4, L5, X5, L6, X6, L7, X7) définies dans le modèle ISO 7498-1, comme représenté à la figure 2. Une couche est par exemple réalisée par un module logiciel mémorisé et exécuté par le terminal ou par un composant électronique piloté par le terminal. Le modèle ISO à sept couches n'est pas limitatif et plusieurs couches de protocoles peuvent être regroupées ou une couche de protocole peut être séparée en deux sous-couches. L'ensemble des couches de communication forme par exemple un canal (CA1, CAx) de communication entre un applicatif ou application interne au terminal mobile et l'extérieur du terminal mobile, les couches utilisées pouvant, par exemple, être déterminées par une commande (cmd_CA1, cmd_CAx) du dispositif (ACM1) de gestion des communications. Des exemples de couches de différents niveaux seront notamment décrits par la suite.

Des applicatifs peuvent par exemple être, de manière non limitative, des programmes réalisant les applications suivantes :

- télévision en directe utilisant par exemple un service de lecture en continu également désigné par « streaming », les données en continu étant par exemple transférées via le réseau 3G avantageusement utilisé pour les contrôles relatifs aux droits d'exploitation et aux licences,
- messagerie instantanée utilisant une connexion avec un serveur central fournissant des informations sur les états d'autres usagers connectés et permettant une transmission d'information entre usagers,
- courrier électronique réalisant une connexion avec un serveur de messagerie tel qu'un serveur Internet ou réalisant des envois et réception de courriers électroniques protégés par un nom de connexion et un mot de passe,
- navigateur également appelé "Browser", permettant l'affichage de pages multimédia interactives comme des pages Internet pouvant être décrites selon différents langages tels que par exemple HTML (Hypertext Markup Language) ou XHTML (Extensible HyperText Markup Language),
- gestionnaire de téléchargement, également appelé « Download Manager » utilisant par exemple le réseau Wi-Fi pour lé téléchargement de fichiers vidéo disponible sur des sites Internet ou sur des terminaux fixes ou mobiles appartenant à des particuliers.

Chacun des applicatifs comprend par exemple une interface (Int1, Intx) de gestion comprenant une interface (C1, Cx) client et respectivement une interface (S1, Sx) serveur permettant de communiquer avec une interface serveur et respectivement une interface client du gestionnaire de communication. De manière non limitative, cette interface est prévue dans l'applicatif pour se connecter au mieux à un réseau tel que le réseau Internet. Un module dans l'applicatif comprend par exemple des données d'identification de l'applicatif et des données représentatives d'un ou plusieurs modes de connexion les mieux adaptés pour un fonctionnement optimum ou des modes acceptables pour un fonctionnement dégradés ou des modes interdits incompatibles avec l'applicatif. L'interface de l'applicatif communiquant avec le dispositif de gestion comprend par exemple des données représentatives de types de canaux de communication mémorisés utilisables par l'applicatif. L'interface peut aussi comprendre un module d'attribution ou de choix d'un canal disponible parmi plusieurs canaux proposés par le dispositif de gestion des canaux de communication, mais de préférence l'attribution d'un canal de communication sera attribué à l'applicatif, par le dispositif de gestion des canaux de communication.

L'applicatif peut par exemple fournir, dans une requête de canal de communication envoyée au dispositif de gestion, des paramètres relatifs au canal requis par l'applicatif. De manière non limitative, ces paramètres peuvent être obligatoires ou préférés pour l'applicatif.

Selon un exemple non limitatif, des attributs peuvent être ajoutés à un page Internet ou à un autre script exécuté par un interpréteur, sous la forme d'une structure de contraintes comprenant :

- un champ relatif à la tarification comprenant par exemple des données représentatives d'un type déterminé de facturation par un opérateur,
- un champ relatif à la sécurité comprenant par exemple une donnée vraie, ou respectivement fausse, représentative d'une communication sécurisé ou cryptée, ou respectivement non sécurisée ou non cryptée,
- un champ relatif à l'authentification comprenant par exemple une donnée vrai, ou respectivement fausse, représentative d'une authentification par identifiant et mot de passe, ou respectivement d'une non authentification,
- un champ relatif à la bande passante disponible comprenant des données représentatives d'une bande passante minimum ou d'une plage dans laquelle doit se trouver la bande passante.

Chaque label ou TAG HTML ou XHTML comprendra par exemple un attribut de contrainte conforme à cette structure de contrainte. Le lien n'est alors exécuté que pour un canal de communication attribué à l'applicatif se conformant à l'attribut de contrainte. Une condition peut par exemple être que la bande passante soit d'au moins 200kbps.

De façon avantageuse, un gestionnaire de communication (ACM1) gérant les applicatifs à leur activation et recevant des paramètres de contraintes correspondant à l'applicatif, est particulièrement adapté aux interpréteurs de scripts, pour lesquels chaque script ou chaque page Internet peut nécessiter des contraintes différentes pour le canal de communication utilisé.

Si par exemple le terminal se connecte à un point de connexion de type Hotspot Wi-Fi public non sécurisé, le navigateur autorisera par exemple l'accès à Internet non sécurisé mais refusera par exemple d'accéder à une page Internet de consultation de courriers électroniques confidentiels ou bien le navigateur Internet sera par exemple basculé par le dispositif de gestion des communications, vers le réseau GPRS ou UMTS disponible, pour consulter les courriers électroniques. Le basculement est par exemple transparent pour l'utilisateur et dépend d'un attribut de contrainte relatif à l'authentification lié à la page de consultation du courrier.

Le gestionnaire de communication gérant chaque applicatif au moment de son application, est aussi avantageusement adapté à l'exécution de scripts, par exemple de type Flash, téléchargés depuis Internet et exécutés dans le terminal mobile par un Interpréteur Flash installé dans le terminal mobile, en prenant en compte des contraintes telles qu'un débit minimum ou une tarification déterminée. Ainsi les canaux de communication peuvent être automatiquement adaptés pour chaque script exécuté.

Le bus (B0) est par exemple défini avec un point d'entrée prédéterminé connu et des adresses ou ports prédéterminés et connus des modules client (C0) et serveur (SO) du dispositif de gestion des connexions. Le module (ACM1) de gestion comprend par exemple un module principal (M0) en communication avec l'interface (Int0) de bus et avec des modules secondaires. Le module principal exécute par exemple un algorithme déterminé pour l'envoi d'information ou de commandes relatives aux canaux de communication. Le module principal peut aussi être conforme à des processus de décision sous la forme de réseaux de neurones ou utiliser tout type de programmation avec par exemple des capacités de mémorisation et d'exploitation d'évènements passés. Le dispositif de gestion (ACM1) peut aussi comprendre des fonctions ou des méthodes, par exemple pour une mise à jour ou une initialisation, via un réseau mobile ou fixe, par un opérateur. Ainsi le terminal peut être configuré pour être prêt à recevoir des applicatifs équipés d'une interface supplémentaire de communication avec le bus (B0) en communication avec le dispositif de gestion des connexions et des communications externes. D'une part le canal de communication et la connexion établis pour l'applicatif sont optimisés et d'autre part l'architecture du terminal facilite les installations de nouveaux applicatifs ou l'exécution de nouveaux scripts. De manière non limitative le module principal peut comprendre un module d'attribution des canaux aux applicatifs ou des modules d'attribution peuvent être réalisés dans chaque applicatif.

L'applicatif peut aussi être associé à un programme greffon, également désigné par « plugin », qui permet à l'applicatif d'envoyer ou de recevoir des messages vers ou en provenance du dispositif de gestion des connexions.

Un applicatif (App1, Appx) en communication avec le bus (B0) de gestion, comprend par exemple un module de traitement des informations ou évènements envoyés par le dispositif de gestion (ACM1). Cet applicatif peut aussi comprendre un module d'exécution des commandes de branchement à un canal de communication ou de débranchement d'un canal de communication, transmises par le dispositif de gestion.

Selon un exemple de réalisation, le bus de gestion est par exemple réalisé selon le protocole RPC (Remote Procedure Call) qui permet de faire des appels de procédures entre deux programmes à l'aide d'un serveur d'applicatifs. Ce protocole utilisé selon le modèle client-serveur, permet par exemple de gérer les différents messages entre ces programmes.

Selon un exemple de réalisation le bus (B0) de gestion est par exemple géré par un contrôleur de bus comprenant par exemple une adresse d'entrée dans une pile telle qu'une pile de type FIFO (First In First Out) de stockage des messages avant leur transmission. Un pointeur de pile est par exemple incrémenté, ou respectivement décrémenté, après la réception d'un nouveau message, ou respectivement après l'effacement d'un message transmis. Le contrôleur de bus gère ainsi les transmissions de messages entre un ou plusieurs applicatifs et le dispositif gestionnaire de connexions.

Le module (ACM1) gestionnaire de connexion permet par exemple la création ou l'ouverture de canaux de communication utilisés par les applicatifs du terminal ou de la carte SIM. Le module (ACM1) gestionnaire de connexion comprend par exemple les fonctionnalités d'un gestionnaire de communications de niveau 4 ou toutes les couches successives peuvent par exemple être déterminées par le dispositif de gestion des connexions. Le dispositif de gestion des connexions peut aussi supprimer un canal après la fin de son utilisation par un ou plusieurs applicatifs. Ainsi tout type de canal disponible peut être établi, par le module (ACM1) gestionnaire de connexion, entre un applicatif (App1, Appx) interne au terminal mobile et un applicatif externe au terminal mobile. Les canaux de communication peuvent notamment utiliser différents protocoles ou différents ports ou être reliés à différents serveurs. Une application de télévision mobile ne se connecte par exemple que par des protocoles et des ports déterminés connus tels que RTP (Real-time Transport Protocol) ou RTSP (Real Time Streaming Protocol).

Les canaux de communication peuvent utiliser différents types de réseaux, certains serveurs ou services n'étant par exemple exclusivement accessibles que par des points d'accès réseaux déterminés. Un opérateur pourra par exemple limiter l'accès à un service déterminé pour des canaux établis passant par un point d'accès de type WAP (Wireless Application Protocol). Une contrainte relative à un point d'accès à un service, imposée au canal de communication, permet ainsi au gestionnaire de communication de gérer les accès de type « wallgarden » où un serveur ou un service ne sont accessibles que depuis un ou plusieurs réseaux sécurisé par authentification, gérés par exemple par un même opérateur.

Le module de gestion des connexions comprend de manière non limitative, des modules complémentaires comprenant des données prédéterminées en fonction du type de terminal mobile ou des données mises à jour via le réseau par un serveur de mise à jour de l'opérateur ou via le bus de communication par les applicatifs internes au terminal mobile. Les modules complémentaires réalisent de manière non limitative des fonctions telles que :

- un module (M_loc) de localisation du terminal mobile par rapport au point de connexion ou aux noeuds de communications dans les réseaux mobiles de communication, en fonction par exemple de données représentatives d'un point de connexion identifié ou de stations de liaison radiofréquence identifiées,
- un module (M_tar) de tarification à appliquer pour les communications réalisées par l'utilisateur, en fonction par exemple de données représentatives de l'abonnement de l'utilisateur,
- un module (M_prior) de priorité gérant des types de canaux d'accès, en fonction par exemple des données mémorisées représentatives d'un rang de priorité ou d'un niveau de sécurité minimum de codage des données échangées, d'un niveau de sécurité minimum d'authentification, ou d'identifiants de connexion ou de mots de passe mémorisés à la demande de l'utilisateur et associés à des services déterminés,
- un module (M_adr) d'adressage des applicatifs reliés au bus (B0) de communication, en fonction de données représentatives d'identifiants des applicatifs, le module d'adressage pouvant par exemple aussi comprendre différents modes de connexion ou protocoles compatibles, des modes de communication avec le module gestionnaire de tâches en mode maître ou esclave ou les deux, des profils optimums des applicatifs toujours connectés ou connectés durant un délai minimum déterminé ou connectés selon des intervalles de temps minimums déterminés,
- un module (M5) d'initialisation ou de mise à jour d'indices (ind_CA1_A, ind_CA1_E, ind_CAx_A, ind_CAx_E) de performance associés à des identifiants de canaux (ID_CA1, ID_CAx).

Le gestionnaire de communication peut aussi comprendre une bibliothèque de type d'applicatifs chacun associé à des contraintes relatives aux canaux de communication. Les contraintes relatives aux types de canaux de communication requis par les applicatifs peuvent aussi être envoyés directement par les applicatifs, au gestionnaire de communication (ACM1). De manière non limitative, le dispositif de gestion pourra gérer des canaux pour plusieurs applicatifs pouvant utiliser des connexions ou des canaux différents.

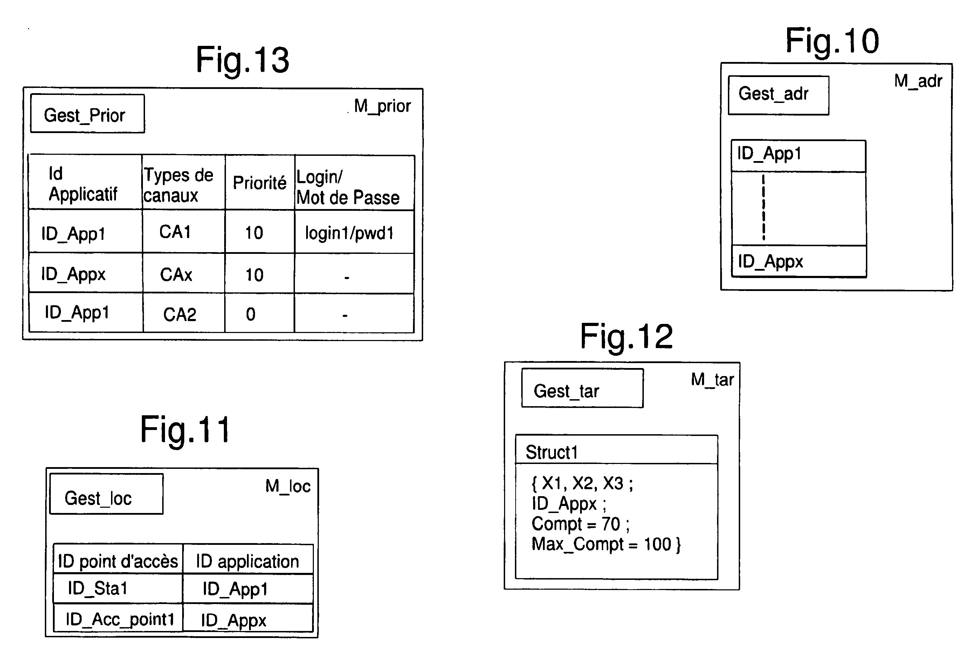

La figure 10 représente un exemple non limitatif de module (M_adr) d'adressage comprenant une liste d'identifiants d'applicatifs (ID_App1, ID_Appx) gérée par un module (Gest_adr) de gestion de la liste. Les identifiants de cette liste correspondent par exemple aux applicatifs activés nécessitant une communication avec l'extérieur du mobile et en communication avec le bus de gestion.

La figure 11 représente un exemple non limitatif de module (M_Loc) de localisation comprenant un module de gestion (Gest_loc) d'un tableau associant des identifiants (ID_Sta1, ID_Acc_point1) de stations de liaison radiofréquence ou de point de connexion au réseau sans fil ou de hotspot Wi-Fi, à des identifiants d'applicatifs (ID_App1, ID_Appx). Le module de gestion (Gest_loc) réalise par exemple des contrôles sur les canaux, par exemple à l'état de transaction et recherche les identifiants de station ou de point d'accès dans ces canaux. Le dispositif de gestion mémorise par exemple des données représentatives des couches des canaux et des états des canaux. En cas de détection, le module de gestion transmet par exemple au module principal des données représentatives d'une commande de branchement de l'applicatif identifié sur le canal trouvé. La localisation par exemple d'une borne Wi-Fi de connexion correspondant à un boîtier réseau personnel disposé chez l'utilisateur, entraîne par exemple une ou plusieurs commandes de branchements des applicatifs internes à un ou plusieurs canaux passant par ce boîtier. Ainsi les ressources radio des réseaux mobiles sont optimisées pour l'opérateur et la qualité de service est optimisée de façon transparente pour l'utilisateur. L'utilisateur bénéficie par exemple d'un accès gratuit illimité via son boîtier personnel. La localisation peut aussi correspondre à une entreprise comprenant un point d'accès protégé dont l'identifiant est mémorisé dans le module de localisation et associé à un ou plusieurs identifiants d'applicatifs pour les faire utiliser de préférence ce point d'accès protégé. Ainsi la sécurité est de plus optimisée.

La figure 12 est un exemple non limitatif de module (M_tar) de tarification comprenant un module (Gest_tar) de gestion d'une ou plusieurs structures (Struct1) dans le module de tarification. Ces structures comprennent par exemple des données (X1, X2, X3) représentatives d'un type de réseau déterminé, associées à :

- un identifiant d'applicatif (ID_Appx),
- un compteur (Compt) d'usage,
- un seuil maximum (Max_Compt) déterminé.

Le module de gestion réalise par exemple l'incrémentation du compteur d'usage lors d'une utilisation du réseau déterminé par l'applicatif identifié et vérifie que le compteur ne dépasse pas ou n'atteint pas le seuil maximum. Dans le cas où le compteur est supérieur ou égal au seuil maximum, le module de gestion transmet par exemple au module principal (M0) des données de commande de coupure de la communication de l'applicatif identifié par ce type de canal associé. Ainsi selon l'abonnement souscrit par l'utilisateur, les communications peuvent être limitées sur certains types de réseaux pour certaines applications. Un basculement transparent pour l'utilisateur est par exemple alors commandé.

La figure 13 est un exemple non limitatif de module (M_prior) de priorité comprenant un module de gestion (Gest_Prior) d'un tableau associant aux identifiants d'applicatifs (ID_App1, ID_Appx) un ou plusieurs types de canaux (CA1, CAx), chaque canal associé à un identifiant d'applicatif étant associé à un rang ou numéro de priorité et éventuellement à un identifiant de connexion et à un mot de passe (login1/pwd1). De manière non limitative, les rangs de priorité sont établis à partir de données de compatibilité et de manière non limitative fournies par chaque applicatif lors de sa connexion au bus (B0) de gestion. Le module de gestion détermine par exemple un canal à utiliser par une application dans une configuration déterminée, ou les canaux sont contrôlés afin de déterminer les canaux disponibles pour cet applicatif, puis détermine le canal le plus prioritaire parmi les canaux disponibles.

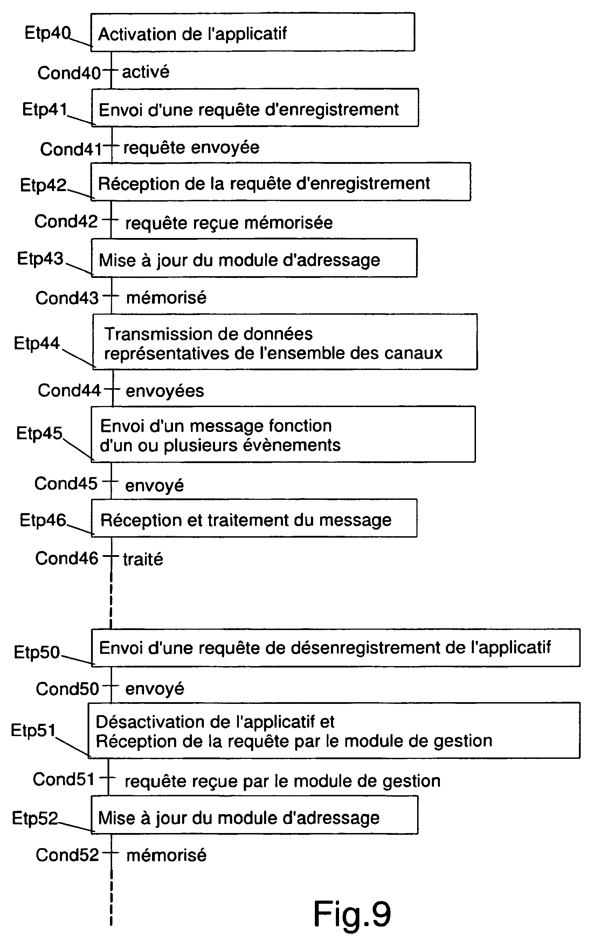

La figure 9 est un exemple non limitatif de procédé d'enregistrement d'un applicatif auprès du module de gestion des connexions. L'applicatif par exemple à l'état dormant est par exemple activé (Etp40) lors d'une étape d'activation, par exemple par un système d'exploitation du terminal mobile.

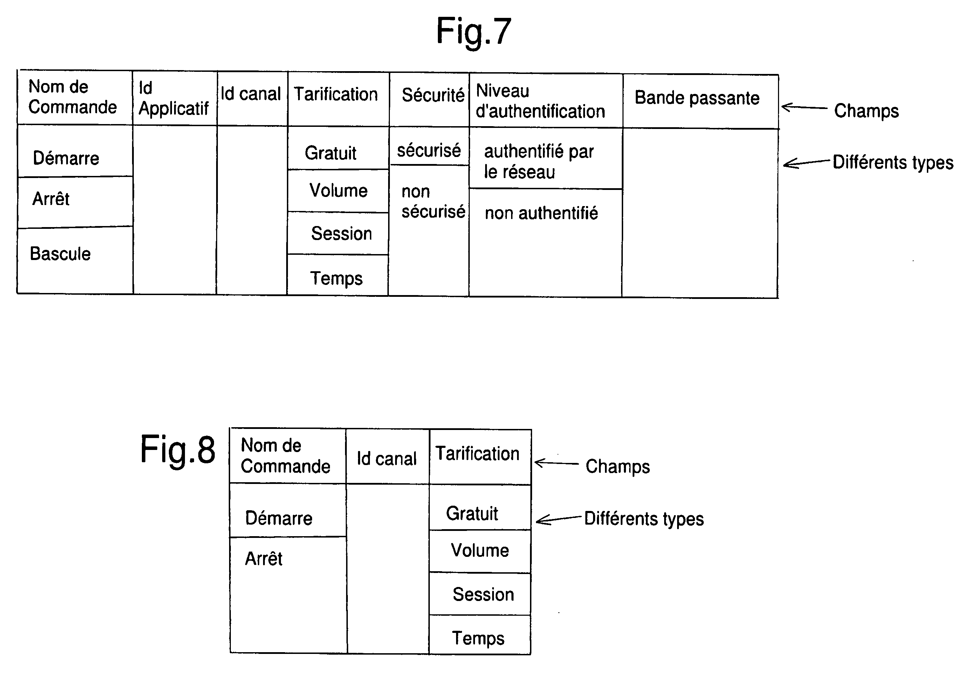

Après (Cond40) que l'applicatif ait été activé, une étape suivante d'envoi d'une requête d'enregistrement par l'applicatif au dispositif de gestion des communications, est par exemple exécutée. La requête d'enregistrement comprend par exemple au moins des données d'identification de l'applicatif. La requête d'enregistrement peut aussi comprendre des données représentatives des canaux de communications compatibles ou des types de réseaux compatibles ou des données représentatives d'un coût maximum ou d'un niveau de sécurité minimum ou d'une qualité requise minimum pour l'applicatif fonctionne par exemple selon un mode optimum, dégradé ou minimum. La requête d'enregistrement peut par exemple être conforme à la figure 7. Un attribut représentatif de contraintes de communication pour l'applicatif, sera par exemple intégré au message d'enregistrement.

Après l'envoi (Cond41) de la requête une étape suivante (Etp42) de réception de la requête d'enregistrement par le dispositif de gestion, est par exemple réalisée.

Après la réception et la mémorisation de la requête (Cond42), une étape (Etp43) de mise à jour du module d'adressage est par exemple réalisée. Le module (M_adr) d'adressage mémorise par exemple un identifiant de l'applicatif nouvellement activé. Ainsi le dispositif de gestion prend en compte ce nouvel applicatif dans la gestion des connexions ou des canaux de communication.

Après (Cond43) la mémorisation des données d'identification dans le module d'adressage et éventuellement la mise à jour des autres modules du dispositif de gestion, une étape (Etp44) de transmission de données représentatives de l'ensemble des canaux créés, au nouvel applicatif, est par exemple exécutée par le dispositif de gestion. Le dispositif de gestion peut aussi transmettre des données représentatives d'un canal attribué à l'applicatif, le processus de décision pouvant être exécuté par le dispositif de gestion (ACM1) ou par l'applicatif. Le dispositif de gestion pourra par exemple choisir un canal en fonction des conditions tarifaires les moins onéreuses ou en fonction du niveau de ressources utilisées le plus économique. De manière non limitative, le dispositif de gestion (ACM1) peut aussi répondre à l'applicatif appelant, par une demande de confirmation de connexion à un canal payant, par l'utilisateur, via l'interface homme machine. Les données de branchement au canal payant sont par exemple transmises à l'applicatif après la réception d'un message de confirmation par l'utilisateur, envoyé par l'applicatif au dispositif de gestion (ACM1).

L'initialisation de la table ou du module de priorité est par exemple réalisée par défaut en donnant à chaque canal un même niveau de priorité ou des priorités mémorisées associées à chaque type de canal. Les niveaux de priorité peuvent aussi être déterminés en fonction de paramètres ou de contraintes envoyées par l'applicatif. D'autre part le module gestionnaire de communication réalise par exemple une lecture de différents modules pour pondérer les niveaux de priorité et déterminer le canal le plus avantageux ayant le niveau de priorité pondéré le plus haut ou déterminer de même un ordre des canaux compatibles des plus avantageux au moins avantageux.

Le canal le plus rapide étant par exemple dans un état de balayage ne sera par exemple pas sélectionné, un canal moins rapide mais à l'état d'association ou de transaction étant en revanche sélectionné.

Après l'envoi de données (Cond44) de branchement à un ou plusieurs canaux disponibles, des étapes (Etp45, Etp46) d'envoi et de réception de messages sont par exemple réalisées. Les messages envoyés (Cond45) par le dispositif de gestion ou respectivement par un des applicatifs activés, sont traités (Cond46) par les applicatifs activés ou respectivement par le dispositif de gestion. Ces messages peuvent être par exemple :

- des commandes de branchement ou de débranchement ou,
- des requêtes de canaux de communication ou,
- des commandes de basculement vers un canal de communication ou,
- des informations ou des évènements relatifs aux canaux de communication.

Le dispositif gestionnaire (ACM1) peut par exemple transmettre, à un ou plusieurs applicatifs, des données représentatives de la fin d'un canal précédemment utilisé. Ces données de fin d'un canal sont par exemple dues à un déplacement en dehors d'une zone de couverture et sont par exemple accompagnées de données représentatives d'un canal de substitution disponible. Le dispositif de gestion peut aussi déterminer un nouveau canal attribué à l'applicatif, de façon transparente pour l'utilisateur. De manière non limitative, si le canal de substitution est un canal payant, l'envoi de données de branchement à ce canal, est par exemple précédé d'un envoi d'une demande de confirmation par l'utilisateur et d'une réception par le dispositif de gestion de la confirmation de l'utilisateur.

Un évènement peut aussi être lié à l'entrée du terminal mobile dans une zone de couverture permettant de diminuer le coût de communication ou de diminuer les ressources occupées relativement aux ressources disponibles du réseau utilisé ou encore d'améliorer la qualité de service. Le dispositif de gestion (ACM1) envoie alors à un ou plusieurs applicatifs, une commande de basculement sur le nouveau canal disponible plus avantageux pour ce ou ces applicatifs. De manière non limitative, des messages d'information peuvent être affichés via l'interface homme machine, par chaque applicatif, ces messages d'information comprenant :

- des informations relatives aux canaux utilisés ou,
- des informations relatives aux nouvelles connexions ou,
- des informations relatives aux fins de connexions ou,
- des informations relatives aux confirmations d'utilisation de connexions payantes disponibles.

L'applicatif ayant par exemple, terminé son rôle ou sa fonction, exécute par exemple une étape (Etp50) d'envoi d'une requête de désenregistrement.

Après l'envoi (Cond50) de la requête de désenregistrement, une étape (Etp51) de désactivation ou terminaison de cet applicatif est par exemple exécutée tandis que le dispositif de gestion réalise la réception de la requête de désenregistrement.

Après la réception de la requête (Cond51) de désenregistrement par le module de gestion, le module de gestion exécute par exemple une étape (Etp52) de mise à jour d'au moins le module d'adressage et éventuellement de l'ensemble des modules du dispositif de gestion. Après cette mise à jour (Cond52) le dispositif de gestion continue par exemple la gestion des connexions et des canaux de communication, par exemple, pour les applicatifs activés et en communication avec le bus (B0) logiciel de gestion.

Des commandes de branchement ou des messages d'information sont par exemple déterminés par le module (M0) principal et envoyés à un ou plusieurs applicatifs, via le bus (B0) de gestion. Des commandes ou des requêtes de branchement peuvent également être envoyées par les applicatifs, au gestionnaire de connexion pour demander, par exemple, l'ouverture d'un accès Internet d'un type déterminé. Des exemples de commandes envoyées par le module de gestion, ou respectivement par un applicatif interne, à un applicatif interne, ou respectivement au dispositif de gestion, sont par exemple représentés selon un tableau à la figure 7. Une commande ou une requête de connexion comprend par exemple :

- un en-tête comprenant le nom de la commande de démarrage ou de fin ou de basculement de communication par un canal, suivie de,
- un identifiant de l'applicatif auquel la commande est destinée, ou l'adresse du gestionnaire de connexion,
- un identifiant de connexion au canal ou un port de l'applicatif
- un type de tarification appliquée, la tarification étant par exemple un accès gratuit ou un accès limité en volume ou une tarification en fonction du type de données échangées et du type d'applicatif ou une tarification en fonction de la durée de la session,
- un niveau de sécurité correspondant au canal, comme par exemple un canal associé à une authentification par le terminal mobile par exemple par un réseau GSM ou UMTS ou un canal non sécurisé comme par exemple un point d'accès Wi-Fi public,
- une bande passante.

Des exemples de réponses envoyées par les applicatifs, ou respectivement par le gestionnaire des canaux de communication, au gestionnaire des canaux de communication, ou respectivement aux applicatifs, sont par exemple représentés selon un tableau à la figure 8. Une réponse comprend par exemple :

- un en-tête comprenant le nom d'une action réalisée tel que le démarrage ou la fin d'une communication avec l'extérieur du terminal mobile,
- un identifiant de canal utilisé,
- une tarification adoptée par l'applicatif.

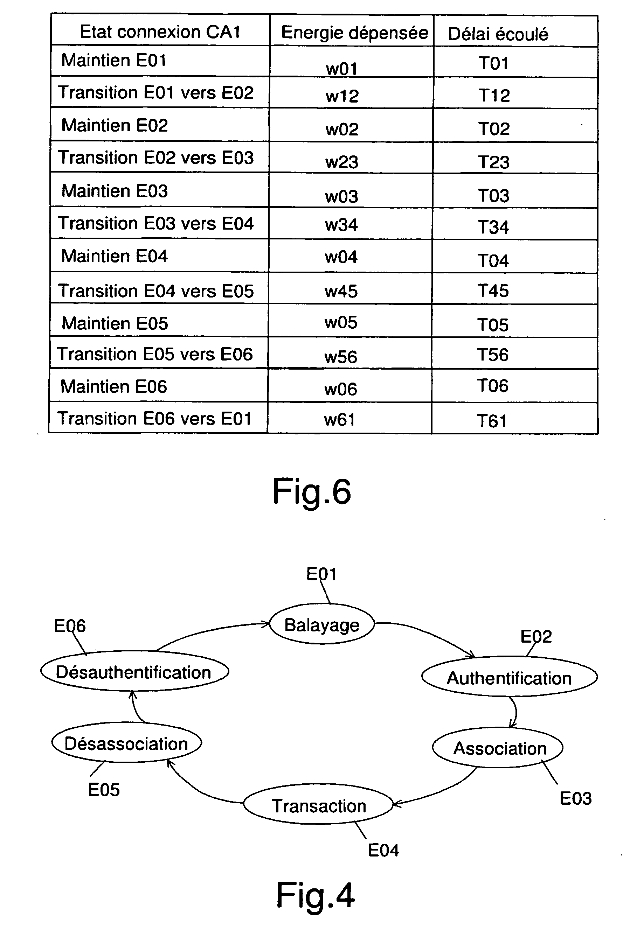

L'état des canaux de communication créés est par exemple pris en compte dans l'évaluation d'un temps de réponse et dans le choix d'attribution d'un canal à un applicatif. La figure 4 représente différents états possibles d'un canal du terminal mobile. Pour chaque canal de communication, le terminal est par exemple dans :

- un état de balayage (E01) comprenant l'envoi de signaux d'identification ou de demande de connexion permettant d'explorer les éventuels points d'accès disponibles,
- un état d'authentification (E02) comprenant des échanges de messages d'authentification entre le terminal et un point d'accès auquel le terminal est connecté, comme par exemple un point d'accès Wi-Fi privé ou une station de liaison radiofréquence d'un réseau cellulaire,
- un état d'association (E03) comprenant la mise à jour d'une ou plusieurs adresses de réseau, telles que des adresses IP, associées chacune à un identifiant de matériel tel qu'une adresse MAC,
- un état de transaction (E04) dans lequel des données sont échangées entre un applicatif interne au terminal mobile et un applicatif ou un serveur externes au terminal mobile,
- un état de désassociation (E05) comprenant la remise à zéro d'une ou plusieurs adresses de réseau utilisée et de leur identifiant de matériel mémorisés par exemple dans une table ARP,
- un état de désauthentification (E06) comprenant la remise à zéro de clé ou la réinitialisation de protocoles sécuritaires.

Chaque type de canal (CA1, CAx) établi par le terminal mobile est par exemple associé en mémoire à des indicateurs de performances. Ces indicateurs permettent notamment de réaliser des choix de connexions optimum de façon transparente pour l'utilisateur. Le terminal comprend par exemple en mémoire des données consultables et pouvant être mises à jour représentatives par exemple de :

- un identifiant (ID_CA1, ID_CAx) d'un canal déterminé associé à
- un indicateur (ind_CA1_A, ind_CAx_A) d'une qualité de service disponible pour l'utilisation de ce canal et associé à
- un indicateur (ind_CA1_E, ind_CAx_E) d'une consommation d'énergie pour l'utilisation de ce canal.

Le module (ACM1) de gestion des connexions comprend par exemple un sous-programme (M5) d'initialisation ou de mise à jour des indices de performance associés aux canaux pouvant être établis par le terminal. Les indices de performance variables sont notamment particulièrement utiles pour les réseaux mobiles.

Pour une évaluation des indices de performance, le terminal exécute par exemple, des commandes de transition d'un état à un autre pour un canal déterminé pour parcourir au moins une fois chaque état. Chaque passage d'un état à un autre est suivi d'un maintien de l'état pendant une durée déterminée. Grâce par exemple à une sonde de mesure du courant consommé ou de mesure d'augmentations de courant, le programme de mise à jour des indicateurs mémorise par exemple des données représentatives d'un pic d'énergie s'ajoutant à la consommation d'énergie lors d'un passage d'un état à un autre ou des données représentatives d'une puissance moyenne consommée durant un état déterminé. Le terminal comprend par exemple aussi un dispositif de mesure d'intervalles de temps, permettant de mesurer des intervalles de temps pour le passage d'un état à un autre ou pour les temps de maintien de chaque état, des données représentatives de ces temps étant mémorisées.

Les indicateurs de performance associés à chaque canal, correspondent par exemple à :

-    une consommation d'énergie (in_CA1_E, ind_CAx_E) nécessaire pour arriver à l'état (E04) de transaction ou pour terminer cet état (E04) dans lequel un utilisateur obtient un service déterminé,
-    une qualité de service (ind_CA1_A, ind CAx_A) correspondant à l'inverse du temps nécessaire pour arriver à l'état (E04) de transaction ou pour terminer cet état (E04).

Ainsi lors d'une phase de test l'ensemble des temps de transition (T12, T23, T34, T45, T56, T61) et des temps de maintien (T01, T02, T03, T04, T05, T06) ainsi que les consommations d'énergie pour ces transitions (w12, w23, w34, w45, w56, w61) et les consommations d'énergie (w01, w02, w03, w04, w05, w06) pour ces maintiens sont mémorisés. A chaque changement d'état du terminal, pour un canal contrôlé par le module (M5), les indices de performance associés à ce canal sont par exemple remis à jour.

L'indice de consommation d'énergie correspond par exemple à la somme des énergies de transitions successives mémorisées pour arriver à l'état de transaction et à la somme des énergies de maintien des états intermédiaires. L'indice d'énergie peut aussi comprendre l'énergie dépensée lors de l'état de transaction. L'énergie totale nécessaire pourrait par exemple s'exprimer comme suit :

$$E_{nécessaire} = \Sigma\ E_{transition\_états\_intermédiaires} + \Sigma\ E_{maintien\_états\_intermédiaire} + E_{maintien\_état\_transaction}$$

Le temps total nécessaire pourrait par exemple s'exprimer comme suit :

$$T_{nécessaire} = \Sigma\ T_{transition\_états\_intermédiaires} + \Sigma\ T_{maintien\_états\_intermédiaire} + T_{maintien\_état\_transaction}$$

Le tableau mémorisé et représenté à la figure 6 comprend pour un canal déterminé :

-    les énergies (w01, w02, w03, w04, w05, w06) dépensées pour les différents états (E01, E02, E03, E04, E05, E06) maintenus de ce canal,
-    les énergies (w12, w23, w34, w45, w56, w61) dépensées pour les transitions entre les états successifs,
-    les délais écoulés (T01, T02, T03, T04, T05, T06) lors des maintiens des différents états (E01, E02, E03, E04, E05, E06) de ce canal,
-    les délais écoulés (T12, T23, T34, T45, T56, T61) pour les transitions entre les états successifs.

Le programme de sommation comprend par exemple des accès en mémoire aux données représentatives des énergies successivement dépensées, en commençant à partir de l'état en cours jusqu'à l'état de transaction.

L'indice de qualité de service comprend par exemple le calcul du délai total pour se positionner dans un état de transaction pour un canal déterminé ou pour terminer cet état de transaction, à partir de l'état actuel. Le programme de mise à jour réalise par exemple la somme des temps successifs nécessaires pour les transitions et les maintiens jusqu'à la transition dans l'état de transaction ou jusqu'à la fin de l'état de transaction. L'indice de qualité correspond par exemple à l'inverse du temps total nécessaire.

Ainsi le choix entre plusieurs canaux pour réaliser une transaction, peut prendre en compte la qualité de service proposée et l'énergie nécessaire. Le module de gestion peut aussi traiter les indices en calculant le rapport de l'indice de qualité par l'indice de consommation d'énergie pour chacun des canaux et choisir, par exemple, le canal associé au rapport le plus élevé.

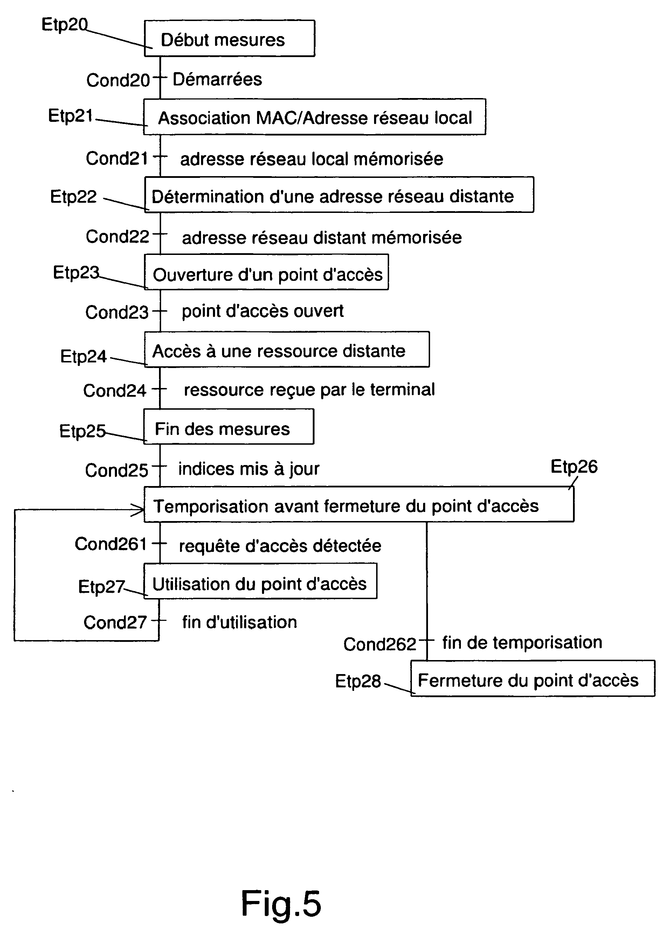

La figure 5 représente un exemple de procédé de test d'une connexion permettant une mise à jour d'indices de performance d'un canal correspondant à cette connexion. Ces opérations effectuées par un programme de test d'une connexion, permettent par exemple d'évaluer les temps de réponse successifs et les dépenses d'énergie successives pour accéder à une ressource après la réalisation du balayage résultant d'une connexion à un point d'accès au réseau sans fil ou à une station de liaison radiofréquence, avec ou sans authentification.

Une étape (Etp20) de début des mesures est par exemple réalisée. Un composant ou un module de mesure du temps total et de temps intermédiaires est par exemple démarré ainsi qu'un composant ou un module de mesure de l'énergie totale dépensée et des tranches successives d'énergie dépensée. Un espace mémoire de stockage des données de mesure est par exemple alloué.

Après (Cond20) le démarrage des mesures, une étape (Etp21) d'association d'une adresse MAC (Media Access Control) et d'une adresse réseau, est par exemple réalisée. Le terminal envoie par exemple une requête ARP (Adress Resolution Protocol) pour obtenir l'adresse IP d'une passerelle. Cette adresse IP est par exemple fournie dans une réponse à la requête ARP. L'association peut aussi comprendre une demande d'adresse IP disponible pour le terminal auprès d'un serveur DHCP (Dynamic Host Configuration Protocol) d'adresse de la passerelle par un client DHCP du terminal mobile. Le terminal comprend par exemple une table ARP dans laquelle des adresses IP sont associées à des adresses MAC. Ces opérations d'association telles que l'envoi d'une ou plusieurs requêtes ARP et la réception d'une ou plusieurs réponses correspondantes ne sont pas conditionnées par l'état de la table ARP. La table est par exemple remise à zéro lors de cette étape de test ou les valeurs contenues sont remises à jour. Ainsi l'énergie et le temps mesurés sont représentatifs du mode d'association et les données de test peuvent être actualisées régulièrement. De manière non limitative, des temps intermédiaires et des dépenses d'énergie intermédiaires sont par exemple mémorisés et réinitialisés à chaque fin d'étape de test et à chaque début d'étape de test suivante.

Après la mémorisation (Cond21) d'une ou plusieurs adresses réseau, une étape (Etp22) de détermination d'une adresse réseau distante est par exemple réalisée. Le terminal envoie par exemple une requête DNS (Domain Name System) comprenant par exemple à une chaîne de caractères mémorisée déterminée correspondant à une adresse de test. Le terminal reçoit par exemple ensuite une réponse à sa requête comprenant une adresse IP correspondante. L'adresse IP est par exemple mémorisée dans une table de correspondance DNS. L'opération d'envoi de la requête DNS est réalisée indépendamment de l'état de la table DNS, de façon à ce que les délais et les énergies mesurées soient représentatifs d'une détermination complète d'adresse réseau distante.

Après (Cond22) la mémorisation de l'adresse réseau distante demandée, une étape (Etp23) d'ouverture d'un point d'accès est, par exemple réalisée. Une commande d'ouverture de session TCP/IP est par exemple réalisée par le terminal mobile. L'ouverture du point d'accès correspond, par exemple, à l'ouverture d'un socket TCP/IP.

Après (Cond23) l'ouverture du point d'accès, une étape (Etp24) d'accès à une ressource distante est par exemple réalisée. La ressource distante est, par exemple une page html (Hypertext Markup Language), accédée par l'envoi d'une requête http (Hypertext Transfer Protocol). La requête est envoyée indépendamment d'éventuels fichiers temporaires de navigation précédemment mémorisés. Il est important d'identifier à la fois le protocole utilisé et le serveur distant ou la plateforme distante. Par exemple, sur certains réseaux Wi-Fi publics, des protocoles peuvent être filtrés. De même, des serveurs de destination peuvent être mis sur liste noire ou « blacklist », par certains réseaux d'accès et ne sont donc pas accessibles sur certaines connexions. Il est donc préférable d'utiliser les informations fournies par les applicatifs lors de leur enregistrement (informations relatives au protocole, à la sécurité ou au serveur distant) pour réaliser ces tests.

Après la réception (Cond24) de la ressource et sa mémorisation, une étape (Etp25) de fin des mesures est par exemple réalisée. Les mesures du temps total et de l'énergie totale sont par exemple arrêtées et les données de temps total écoulés et d'énergie totale dépensée sont par exemple mémorisées. Les données précédemment mémorisées de délais intermédiaires et de dépenses intermédiaires d'énergie sont par exemple traitées pour une mise à jour des indices de performance correspondants.

Après la mise à jour des indices (Cond25), une étape (Etp26) d'attente d'écoulement d'une temporisation déterminée avant fermeture du point d'accès est par exemple réalisée. Si (Cond261) une demande d'utilisation du point accès est détectée, alors l'étape d'attente est suivie d'une étape (Etp27) d'utilisation du point d'accès, puis à la fin (Cond27) de cette utilisation, une nouvelle étape d'attente (Etp26) avant fermeture du point d'accès est par exemple réalisée.

Si (Cond262) à la fin de la temporisation, aucune demande d'utilisation n'est détectée, une étape suivante (Etp28) de fermeture du point d'accès est réalisée.

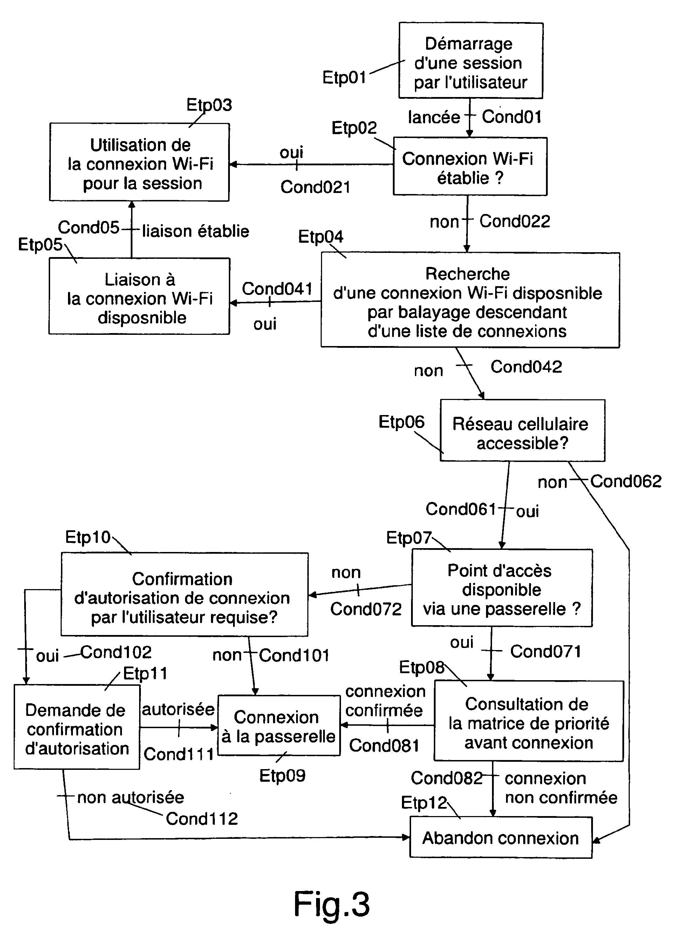

La figure 3 représente un exemple de procédé exécuté après une étape (Etp01) de démarrage d'une session initiée par une application démarrée par l'utilisateur. Après le lancement (Cond01) de la session, le module de gestion des connexions teste par exemple, lors d'une étape (Etp02) suivante, si une connexion Wi-Fi est établie et si cette connexion est compatible avec l'application, par exemple en terme de coût, de qualité ou de sécurité ou selon d'autres critères. Si oui (Cond021) la connexion déjà établie est utilisée pour la session de l'application de l'utilisateur lors d'une étape (Etp03) suivante, par exemple conformément au module de localisation ou au module de priorité. Sinon (Cond022) le module gestionnaire réalise par exemple une étape (Etp04) de recherche d'une connexion Wi-Fi disponible, par exemple par balayage d'une liste mémorisée de connexions.

Si (Cond041) une connexion est trouvée, une étape suivante (Etp05) de liaison à la connexion Wi-Fi disponible est par exemple réalisée. Puis après que la connexion soit établie (Cond05), une étape (Etp03) d'utilisation de cette connexion Wi-Fi est par exemple réalisée.

Si lors du balayage (Etp04) de la liste de connexions Wi-Fi, aucune connexion disponible n'est détectée (Cond042), une étape suivante (Etp06) de test de disponibilité du réseau cellulaire est par exemple réalisée. Si le réseau n'est pas disponible (Cond062), une étape (Etp12) d'abandon de la connexion est par exemple réalisée. Si le réseau cellulaire est disponible (Cond061), une étape suivante (Etp07) de test d'un point d'accès à un service disponible est alors réalisée.

Si un point d'accès à un service est disponible (Cond071) une étape suivante de consultation d'une matrice ou une table de priorité est réalisée. Si la connexion n'est pas confirmée (Cond082) par la table de priorité, alors l'étape (Etp12) d'abandon de la connexion est réalisée. Si la connexion est confirmée (Cond081) par la table de priorité, une étape suivante (Etp09) de connexion à la passerelle associée au point d'accès est réalisée. La table de priorité permet par exemple aussi de gérer l'éligibilité des connexions disponibles pour les applications.

Si à l'étape (Etp07) de confirmation d'un point d'accès disponible via une passerelle n'est pas vérifiée (Cond072) une étape suivante (Etp10) de vérification d'autorisation de connexion par l'utilisateur requise est par exemple réalisée. Ainsi si le module de tarification demande un blocage à cause d'un compte dépassant le seuil maximum, l'utilisateur a la possibilité de passer outre. Si une autorisation par l'utilisateur n'est pas requise (Cond101) l'étape de connexion à la passerelle est par exemple réalisée, tandis que si une autorisation (Cond102) de l'utilisateur est requise, une étape suivante (Etp11) de demande de confirmation d'autorisation par l'utilisateur est par exemple réalisée. Si (Cond111) l'utilisateur autorise alors cette connexion, l'étape suivante (Etp09) de connexion à la passerelle est par exemple réalisée, sinon (Cond112) l'étape (Etp12) d'abandon de connexion est réalisée.

Des exemples de couches de protocoles vont maintenant être décrits. Un applicatif est par exemple connecté selon un protocole correspondant à la couche d'application (7ème couche du modèle ISO 7498-1) tel que, de manière non limitative :

- un protocole du type transfert de fichiers comme par exemple le protocole FTP (File Transfer Protocol), le protocole NFS (Network File System) ou le protocole CIFS (Common Internet File System),
- un protocole du type messagerie comme par exemple le protocole SMTP (Simple Mail Transfer Protocol), le protocole POP (Post Office Protocol), le protocole IMAP (Internet Message Access Protocol) ou le protocole NNTP (Network News Transfer Protocol),
- un protocole du type session à distance correspondant par exemple à la commande « rlogin » sous UNIX,
- un protocole de type envoi de pages HTML (Hypertext Markup Language) comme par exemple HTTP (Hypertext Transfer Protocol),
- un protocole du type exploitation ou gestion comme par exemple DNS (Domain Name System) pour la résolution d'adresse ou SNMP (Simple Network Management Protocol) pour la supervision,
- ou d'autres protocoles d'application.

De manière non limitative, les données applicatives, manipulées par les applicatifs, sont par exemple codées, par un ou plusieurs modules de codage, et transformées en chaînes d'octets transportées par le réseau (6ème couche du modèle ISO 7498-1). Ce codage est par exemple réalisé en ASCII ou en XML (eXtensible Markup Language) ou selon un autre type de codage utilisé pour la présentation.

Les chaînes d'octets codées pour le transport sont par exemple traitées par un module de gestion et de synchronisation des transactions, selon un protocole (5ème couche du modèle ISO 7498-1) tel que, de manière non limitative, ssh (Secure Shell) ou telnet (TELecommunication NETwork). De manière non limitative le module de gestion et de synchronisation des transactions traite aussi la correction des erreurs. De manière non limitative le module de gestion et de synchronisation des transactions traite des transactions point à point ou des transactions multipoints.

Le transport de bout en bout est par exemple géré, par des modules de transport de bout en bout, selon un protocole de transport (4ème couche du modèle ISO 7498-1). Les octets sont par exemple transférés sous la forme de messages, de segments, de séquences ou de paquets. De manière non limitative, les protocoles de transport peuvent être :

- RTP (Real-time Transport Protocol) ou,
- UDP (User Datagram Protocol) ou,
- TCP (Transmission Control Protocol) ou,
- DCCP (Datagram Congestion Control Protocol) ou,
- d'autres protocoles de transport.

Les données transportées sont acheminées de bout en bout à partir des voies de communication du ou des réseaux selon un protocole réseau (3ème couche du modèle ISO 7498-1) prenant en compte le routage et le relayage. De manière non limitative, le protocole de réseau utilisé est par exemple du type :

- IP (Internet Protocol) ou,
- IPSec (IP Security) ou,
- WDS (Wireless Distribution System) ou,
- ICMP (Internet Control Message Protocol) ou,
- d'autres protocoles réseau.

La gestion des trames de données transportées, par exemple entre deux machines adjacentes directement reliées entre elles par un support physique, est par exemple réalisée selon un protocole de liaison (2ème couche du modèle ISO 7498-1). Une détection et une correction d'erreur peuvent aussi être réalisées par le protocole de liaison, comme par exemple dans le réseau X.25 ou dans le réseau GSM. De manière non limitative, le protocole de liaison est par exemple du type :

- Ethernet ou,
- HDLC (High-Level Data Link Control) ou,
- MPLS (MultiProtocol Label Switching) ou,
- PPP (Protocole Point à Point) ou,
- Token Ring (anneau à jeton) ou,
- d'autres protocoles de liaison.

Ces trames de données sont transportées sur une couche physique de transport selon un codage déterminé. Les ondes radiofréquences utilisables correspondent par exemple au réseau GSM ou GPRS ou UMTS ou HSDPA ou Wi-Fi ou WiMAX. A titre d'exemple non limitatif, les services porteurs peuvent être :

- GSM (Global System for Mobile Communications) ou,
- GPRS (General Packet Radio Service) ou,
- E-GPRS (Enhanced GPRS) ou EDGE (Enhanced Data rates for GSM Evolution) ou,
- UMTS FDD-PS (Universal Mobile Telecommunication System - Frequency Division Duplex - Packet Switch),
- HSDPA (High Speed Downlink Packet Access) ou,
- HSUPA (High Speed Uplink Packet Access) ou,
- WLAN (Wireless LAN) ou,
- Wi-Fi (Wireless Fidelity) ou,
- WiMAX (Worldwide Interoperability for Microwave Access) ou,
- Bluetooth® ou,
- MANET (Mobile Ad-hoc NETwork) ou,
- CDMA (Code Division Multiple Access) ou,
- TDMA (Time Division Multiple Access) ou,
- Zigbee, ou Wibro, etc..

**Revendications**

1. Terminal mobile comprenant des composants (A2G, Int01, A3G, Int02, AWIFI, Int03) de communication avec l'extérieur du terminal mobile et un dispositif (ACM1) de gestion des connexions qui comprend un module de création ou de suppression de canaux (CA1, CAx) de communication entre l'extérieur du terminal mobile et au moins un applicatif (App1, Appx) interne au terminal mobile, les canaux établis via plusieurs couches de protocoles étant commandés par le dispositif de gestion, **caractérisé en ce qu'**il comprend un bus (B0) logiciel de gestion prédéterminé en communication d'une part avec une interface (Int0) du dispositif de gestion et d'autre part avec une interface (Int1, Intx) dudit applicatif,
une pluralité de messages relatifs à des canaux de communication, étant transmis entre le dispositif de gestion et ledit applicatif, dont au moins un message d'enregistrement envoyé au dispositif de gestion et comprenant un identifiant dudit applicatif et des données représentatives d'un ou plusieurs types de canaux de communication déterminés compatibles avec ledit applicatif,
une table de priorité mémorisant l'identifiant dudit applicatif et le ou les types de canaux associés à chacun desquels un niveau de priorité mémorisé est associé,
le dispositif de gestion comprenant un module d'attribution d'un des canaux établis audit applicatif, le canal attribué audit applicatif correspondant à un des types de canaux associés audit applicatif dans la table de priorité.

2. Terminal mobile selon la revendication 1, **caractérisé en ce que** le niveau de priorité associé à chacun des canaux associés à chaque applicatif dans la table, est attribué par défaut par le dispositif de gestion ou est attribué en fonction du message d'enregistrement qui comprend le niveau de priorité associé à chaque type de canal ou des données de calcul du niveau de priorité associé à chaque type de canal.

**3.** Terminal mobile selon la revendication 1 ou 2, **caractérisé en ce que** ledit applicatif comprend un module d'enregistrement, ou respectivement de désenregistrement, permettant son enregistrement, ou respectivement son désenregistrement, auprès du dispositif de gestion au moment d'une activation, ou respectivement d'une désactivation, de cet applicatif ou le module d'enregistrement de l'applicatif réalise son enregistrement auprès du dispositif de gestion au moment d'une installation de cet applicatif dans le terminal mobile.

**4.** Terminal mobile selon l'une des revendications 1 à 3, **caractérisé en ce que** le module d'attribution comprend un module (M5) d'initialisation et de mise à jour de données mémorisées représentatives d'indices de performance de chacun des canaux créés, les indices de performance comprenant :

   - un paramètre de temps de réponse pour une consultation d'une ressource distante via ce canal de communication ou
   - un paramètre d'indice de qualité égal à l'inverse du temps de réponse ou
   - un paramètre de consommation d'énergie nécessaire pour la consultation de la ressource distante via ce canal de communication ou
   - un paramètre de rapport de l'indice de qualité par la consommation d'énergie,

une comparaison selon au moins un paramètre, des indices de performance de plusieurs canaux disponibles compatibles avec ledit applicatif, permettant une pondération proportionnelle aux indices de performance, des niveaux de priorité, pour déterminer le canal ayant le niveau de priorité pondéré le plus élevé qui est alors attribué audit applicatif.

**5.** Terminal mobile selon la revendication 4, **caractérisé en ce que** chacun des canaux créés ayant au moins un état parmi une pluralité d'états possibles à savoir :

   - un état (E04) de transaction dans lequel des messages peuvent être échangés avec l'extérieur du terminal mobile, suivant
   - un état (E03) d'association dans lequel des données d'adressage dans un réseau sont mémorisées en association avec des données d'identification de matériel, suivant
   - un état (E02) d'authentification dans lequel des messages d'authentification sont échangés, suivant
   - un état (E01) de balayage dans lequel des points d'accès ou des stations de liaison radiofréquence du canal sont détectées, suivant
   - un état (E06) de désauthentification, suivant
   - un état (E05) de désassociation, suivant l'état (E04) de transaction,

une mise à jour des indices de performance relatifs à un canal est réalisée à chaque changement d'état de ce canal.

**6.** Terminal mobile selon la revendication 5, **caractérisé en ce que** les indices de performance sont calculés par des délais (T01, T12, T02, T23) mémorisés et des dépenses d'énergie (w01, w12, w02, w23) mémorisées correspondant à des maintiens dans les états successifs et à des sauts entre les états successifs, d'un état en cours jusqu'à la terminaison de l'état de transaction après laquelle la consultation de la ressource distante est validée.

**7.** Terminal mobile selon la revendication 6, **caractérisé en ce que** les délais (T01, T12, T02, T23) et les dépenses d'énergie (w01, w12, w02, w23) correspondant aux maintiens dans les états successifs et aux sauts entre les états successifs, sont mesurés et mémorisés par un module de test lors d'une phase de test de chaque canal créé.

**8.** Terminal mobile selon la revendication 6 ou 7, **caractérisé en ce que** le dispositif de gestion comprend un module d'optimisation des canaux qui règle les états des canaux au plus proche de l'état de transaction ou qui maintient un ou plusieurs canaux à l'état (E04) de transaction, l'état de transaction étant maintenu par des envois périodiques de commandes de maintien actif telles que la commande « keep alive », en cas d'inactivité sur le canal maintenu dans l'état de transaction.

**9.** Terminal mobile selon l'une des revendications 5 à 8, **caractérisé en ce que** les types de canaux de communication compatibles avec ledit applicatif, sont chacun associés à leur niveau de priorité mémorisé dans la table de priorité du dispositif (ACM1) de gestion, chaque niveau de priorité correspondant à au moins :

- un mode de fonctionnement optimum de l'applicatif correspondant à une priorité la plus élevée pour l'attribution de ce type de canal par le module d'attribution ou
- un mode de fonctionnement dégradé de l'applicatif correspondant à une priorité moyenne pour l'attribution de ce type de canal par le module d'attribution ou
- un mode de fonctionnement minimum correspondant à une priorité la plus basse pour l'attribution de ce type de canal par le module d'attribution,

le dispositif de gestion renvoyant, en réponse au message d'enregistrement, une réponse de branchement à un canal déterminé selon un mode optimum, un mode dégradé ou un mode minimum relativement aux types de canaux demandés ou une réponse de branchement impossible à un canal,
le dispositif de gestion transmettant audit applicatif, des commandes de basculement vers un autre canal permettant d'améliorer le mode de communication dégradé ou minimum dudit applicatif, suite à une modification des états des canaux établis par le terminal mobile.

**10.** Terminal mobile selon l'une des revendication 5 à 9, **caractérisé en ce que** le dispositif de gestion comprend un module (M_loc) de localisation comprenant des données représentatives d'au moins un point de connexion au réseau associé à l'identifiant mémorisé dudit applicatif, le module de localisation réalisant un contrôle des canaux dans l'état de transaction et transmettant au module d'attribution, à la détection de ce point de connexion dans un des canaux dans l'état de transaction, une commande de basculement des communications de l'applicatif associé, via ce canal.

**11.** Terminal mobile selon la revendication 10, **caractérisé en ce que** le dispositif de gestion comprend un module (M_tar) de tarification comprenant des données représentatives d'au moins un réseau de communication déterminé associé à :

- l'identifiant mémorisé d'un utilisateur du terminal mobile ou
- un compteur d'usage ou
- un seuil maximum du compteur d'usage.

**12.** Terminal mobile selon la revendication 11, **caractérisé en ce qu'**un module d'incrémentation du compteur d'usage est activé à la réception d'un message de confirmation de branchement au réseau par ledit applicatif, le module d'incrémentation est désactivé à la réception d'un message de confirmation de débranchement du réseau par ledit applicatif, ces messages de confirmation étant envoyés par l'applicatif, le module de tarification déclenchant, à la détection d'une valeur du compteur d'usage atteignant ou dépassant le seuil maximum, la transmission au module d'attribution d'une commande de débranchement du canal associé au compteur d'usage, le seuil maximum et le compteur d'usage étant initialisé ou mis à jour en fonction de données mémorisées représentatives d'un abonnement de l'utilisateur.

**13.** Procédé de gestion des communications dans un terminal mobile comprenant des composants (A2G, Int01, A3G, Int02, AWIFI, Int03) de communication avec l'extérieur du terminal mobile et un dispositif (ACM1) de gestion des connexions qui comprend un module de création ou de suppression de canaux de communication entre l'extérieur du terminal mobile et au moins un applicatif (App1, Appx) interne au terminal mobile, les canaux (CA1, CAx) établis via plusieurs couches de protocoles étant commandés par le dispositif de gestion, **caractérisé en ce qu'**il comprend :

- une étape (Etp41) d'envoi d'une requête d'enregistrement auprès du dispositif de gestion par un module d'enregistrement dudit applicatif, la requête d'enregistrement, envoyée via un bus (B0) logiciel de gestion prédéterminé en communication d'une part avec une interface du dispositif de gestion et d'autre part avec une interface dudit applicatif, comprenant un identifiant dudit applicatif et des données représentatives d'un ou plusieurs types de canaux de communication déterminés compatibles avec ledit applicatif,
- une étape d'enregistrement, dans une table de priorité, de l'identifiant dudit applicatif et du ou des types de canaux associés à chacun desquels un niveau de priorité mémorisé est associé,
- une étape de réponse à la requête d'enregistrement par un module d'attribution d'un des canaux établis audit applicatif, le canal attribué audit applicatif correspondant à un des types de canaux associés audit applicatif dans la table de priorité.

**14.** Procédé selon la revendication 13, **caractérisé en ce que** le module d'attribution comprenant un module (M5) d'initialisation et de mise à jour de données mémorisées représentatives d'indices de performance de chacun des canaux créés, les indices de performance comprenant :

- un paramètre de temps de réponse pour une consultation d'une ressource distante via ce canal de communication ou
- un paramètre d'indice de qualité égal à l'inverse du temps de réponse ou
- un paramètre de consommation d'énergie nécessaire pour la consultation de la ressource distante via ce canal de communication ou
- un paramètre de rapport de l'indice de qualité par la consommation d'énergie,

le procédé comprend une étape de pondération par au moins un paramètre des indices de performance de plusieurs canaux disponibles compatibles avec ledit applicatif, permettant une comparaison des niveaux de priorité pondérés pour déterminer le canal de niveau de priorité pondéré le plus haut, attribué audit applicatif.

15. Procédé selon la revendication 14, **caractérisé en ce que** chacun des canaux créés ayant au moins un état parmi une pluralité d'états possibles dont un état (E04) de transaction dans lequel des messages peuvent être échangés avec l'extérieur du terminal mobile, suivant un état (E03) d'association dans lequel des données d'adressage dans un réseau sont mémorisées en association avec des données d'identification de matériel, suivant un état (E02) d'authentification dans lequel des messages d'authentification sont échangés, suivant un état (E01) de balayage dans lequel des points d'accès ou des stations de liaison radiofréquence du canal sont détectées, suivant un état (E06) de désauthentification, suivant un état (E05) de désassociation, suivant l'état (E04) de transaction, le procédé comprend :

- une étape de mesure et de mémorisation, par un module de test, de délais (T01, T12, T02, T23) et de dépenses d'énergie (w01, w12, w02, w23) correspondant aux maintiens dans les états successifs et aux sauts entre les états successifs,
- une étape de calcul et de mise à jour des indices de performance par sommation des délais ou des dépenses d'énergie, d'un état en cours jusqu'à la terminaison de l'état de transaction après laquelle une consultation d'une ressource distante est validée.

## Claims

1. A mobile terminal comprising components (A2G, Int01, A3G, Int02, AWIFI, Int03) for communicating with the outside of the mobile terminal and a device (ACM1) for managing connections, which comprises a module for creating or suppressing communication channels (CA1, CAx) between the outside of the mobile terminal and at least one application program (App1, Appx) internal to the mobile terminal, the channels established via several protocol layers being controlled by the management device, **characterized in that** it comprises a predetermined management software bus (B0) in communication with an interface (Int0) of the management device on the one hand and with an interface (Int1, Intx) of said application program on the other hand, a plurality of messages relating to communication channels, being transmitted between the management device and said application program, including at least one recording message sent to the management device, and comprising an identifier of said application program and data representative of one or more types of determined communication channels compatible with said application program, a priority table storing in memory the identifier of said application program and the type(s) of associated channels, with each of which a priority level stored in memory is associated, the management device comprising a module for assigning one of the established channels to said application program, the channel assigned to said application program corresponding to one of the types of channels associated with said application program in the priority table.

2. The mobile terminal according to claim 1, **characterized in that** the priority level associated with each of the channels associated with each application program in the table is by default assigned by the management device or is assigned depending on the recording message, which comprises the priority level associated with each type of channel or data for calculating the priority level associated with each type of channel,

3. The mobile terminal according to claim 1 or 2, **characterized in that** said application program comprises a recording or respectively an unrecording module, allowing its recording or respectively its un-recording, at the management device at the moment of an activation, or respectively a de-activation of this application program or the recording module of the application program performs its recording at the management device at the moment when this application program is installed in the mobile terminal.

4. The mobile terminal according to one of claims 1 to 3, **characterized in that** the assignment module comprises a module (M5) for initializing and updating of data stored in memory, representative of performance indexes of each of the created channels, the performance indexes composing:

- a response time parameter for consulting a remote resource via this communication channel or
- a quality index parameter equal to the reciprocal of the response time or
- a parameter of energy consumption required for consulting the remote resource via this communication channel or
- a parameter of the ratio of the quality index over the energy consumption,

a comparison according to at least one parameter, of the performance indexes of several available channels compatible with said application program, allowing weighting proportional to the performance indexes, of the priority levels in order to determine the channel having the highest weighted priority level, which is then assigned to said application program.

5. The mobile terminal according to claim 4, **characterized in that**, each of the created channels having at least one state from a plurality of possible states, i.e.:

- a transaction state (E04) in which messages may be exchanged with the outside of the mobile terminal, following
- an association state (E03) in which addressing data in a network are stored in memory, associated with data for identifying equipment, following
- an authentication state (E02) in which authentication messages are exchanged, following
- a scanning state (E01) in which access points or radio-frequency link stations of the channel are detected, following
- a deauthentication state (E06), following.
- a disassociation state (E05), following the transaction state (E04),

updating of the performance indexes relating to one channel is carried out at each change of state of this channel.

6. The mobile terminal according to claim 5, **characterized in that** the performance indexes are calculated by delays (T01, T12, T02, T23) stored in memory and energy expenditures (w01 w12, w02, w23) stored in memory corresponding to maintenances in the successive states and to jumps between the successive states, from a current state up to the termination of the transaction state after which consultation of the remote resource is validated.

7. The mobile terminal according to claim 6, **characterized in that** the delays (T01, T12, T02, T23) and the energy expenditures (w01, w12, w02, w23) corresponding to maintenances in the successive states and to jumps between successive states, are measured and stored in memory by a test module during a test phase of each created channel.

8. The mobile terminal according to claim 6 or 7, **characterized in that** the management device comprises a module for optimizing the channels which adjusts the states of the channels as close as possible to the transaction state or which maintains one or more channels in the transaction state (E04), the transaction state being maintained by periodically sending active maintenance commands, such as the "keep alive" command in the case of inactivity on the channel maintained in the transaction state.

9. The mobile terminal according to one of claims 5 to 8, **characterized in that** the type of communication channels compatible with said application program are each associated with their priority level stored in memory, in the priority table of the management device (ACM1), each priority level corresponding to at least:

- an optimum operating mode of the application program corresponding to the highest priority for the assignment of this type of channel by the assignment module or
- a degraded operating mode of the application program, corresponding to medium priority for assigning this type of channel by the assignment module or
- a minimum operating mode corresponding to the lowest priority level for assigning this type of channel by the assignment module,

the management device sending back as a response to the recording message, a response for connecting to a determined channel according to an optimum mode, a degraded mode or a minimum mode relatively to the types of requested channels or a response that it is impossible to connect to one channel,

the management device transmitting to said application program, commands for switching to another channel allowing improvement of the degraded or minimum communication mode of said application program, following modification of the states of the channels established by the mobile terminal.

10. The mobile terminal according to one of claims 5 to 9, **characterized in that** the management device comprises a localization module (M_loc) comprising data representative of at least one connection point to the network associated with the identifier stored in memory of said application program, the localisation module achieving control of the channels in the transaction state, and transmitting to the assignment module, upon detection of this connection point in one of the channels in the transaction state, a command for switching the communications of the associated application program via this channel.

11. The mobile terminal according to claim 10, **characterized in that** the management device comprises a price-setting module (M_tar) comprising data representative of at least one determined communications network associated with:

- the identifier stored in memory of a user of the mobile terminal or
- a counter of use, or
- a maximum threshold of the counter of use,

12. The mobile terminal according to claim 11, **characterized in that** a module for incrementing the counter of use is enabled upon receiving a message confirming connection to the network by said application program, the incrementation module is disabled upon receiving a message confirming the disconnection of the network by said application program, these confirmation messages being sent by the application program, the price-setting module, upon detecting a value of the counter of use attaining or exceeding the maximum threshold, triggering the transmission to the assignment module of a command for disconnecting the channel associated with the counter of use, the maximum threshold and the counter of use being reset or updated depending on data stored in memory representative of a subscription of the user.

13. A method for managing communications in a mobile terminal comprising components (A2G, Int01, A3G, Int02, AWIFI, Int03) for communicating with the outside of the mobile terminal and a device (ACM1) for managing connections which comprises a module for creating or suppressing communication channels between the outside of the mobile terminal and at least one application program (App1, Appx) internal to the mobile terminal, the channels (CA1, CAx) established via several layers of protocols being controlled by the management device, **characterized in that** it comprises:

- a step (Etp41) for sending a recording request to the management device through a recording modules of said application program, the recording request, sent via a predetermined software management bus (B0) communicating with one interface of the management device on the one hand and with an interface of said application program on the other hand, comprising an identifier of said application program and data representative of one or more determined communication channels compatible with said application program,
- a step for recording in a priority table, the identifier of said application program and type(s) of channels associated with each of which a priority level stored in memory is associated,
- a step for answering the recording request by a module for assigning one of the established channels to said application program, the channel assigned to said application program corresponding to one of the types of channels associated with said application program in the priority table.

14. The method according to claim 13, **characterized in that** the assignment module comprises a module (M5) for initializing and updating data stored in memory, representative of performance indexes of each of the created channels, the performance indexes comprising:

- a response time parameter for consulting a remote resource via this communication channel or
- a quality index parameter equal to the reciprocal of the response time or.
- a parameter of energy consumption required for consulting the remote resource via this communications channel or
- a parameter of the ratio of the quality index over the energy consumption,

the method comprises a step for weighting with at least one parameter the performance indexes of several available channels compatible with said application program, allowing a comparison of the weighted priority levels in order to determine the channel with the highest weighted priority level, assigned to said application program.

15. The method according to claim 14, **characterized in that** each of the created channels having at least one state from a plurality of possible states including a transaction state (E04) in which messages may be exchanged with the outside of the mobile terminal, following an association state (E03) in which addressing data in a network are stored in memory, associated with the data for identifying the equipment, following an authentication state (E02) in which authentication messages are exchanged, following a scanning state (E01) in which access points or radio-frequency link stations of the channel are detected, following a deauthentication state (E06), following a disassociation state (E05), following the transaction state (E04), the method comprises:

- a step for measuring and storing in memory by a test module, delays (T01, T12, T02, T23) and energy expenditures (w01, w12, w02, w23), corresponding to the maintenances in the successive states and to the jumps between successive states,
- a step for calculating and updating the performance indexes by summing the delays or energy expenditures, of one current state until termination of the transaction state, after which consultation of a remote resource is validated.

**Patentansprüche**

1. Mobiles Endgerät, das Komponenten (A2G, Int01, A3G, Int02, AWIFI, Int03) zur Kommunikation mit der Außenwelt des mobilen Endgeräts und eine Verwaltungsvorrichtung (ACM1) der Verbindungen umfasst, die ein Modul zur Herstellung oder Unterdrückung von Kommunikationskanälen (CA1, CAx) zwischen der Außenwelt des mobilen Endgeräts und mindestens einer internen Anwendung (App1, Appx) des mobilen Endgeräts umfasst, wobei die über mehrere Protokolischichten eingerichteten Kanäle von der Verwaltungsvorrichtung gesteuert werden, **dadurch gekennzeichnet, dass** es einen vorbestimmten Verwaltungs-Softwarebus (B0) umfasst, der einerseits mit einer Schnittstelle (Int0) der Verwaltungsvorrichtung und andererseits mit einer Schnittstelle (Int1, Intx) der Anwendung kommuniziert,
wobei eine Vielzahl 1 von Nachrichten relativ zu Kommunikationskanälen zwischen der Verwaitungsvomchtung und der Anwendung übertragen werden, darunter mindestens eine an die Verwaltungsvorrichtung geschickte Anmeldenachricht, die ein Kennwort der Anwendung und Daten umfasst, die für einen oder mehrere bestimmte Kommunikationskanartypen repräsentativ sind, die mit der Anwendung kompatibel sind,
wobei eine Priontätentabelle das Kennwort der Anwendung und den oder die verknüpften Kanaltypenspeichert, mit denen jeweils ein gespeichertes Prioritätsniveau verknüpft ist,
wobei die Verwaitungsvorrichtung ein Zuweisungsmodul eines der eingerichteten Kanäle zu der Anwendung umfasst, wobei der der Anwendung zugewiesene Kanal einem der Kanaltypen entspricht, mit dem die Anwendung in der Prioritätentabelle verknüpft ist.

2. Mobiles Endgerät nach Anspruch 1, **dadurch gekennzeichnet, dass** das Prioritätsniveau, das mit jedem der mit jeder Anwendung in der Tabelle verknüpften Kanäle verknüpft ist, von der Verwaltungsvorrichtung standardmäßig zugewiesen ist oder in Abhängigkeit von der Anmeidenachricht zugewiesen wird, die das mit jedem Kanaltyp verknüpfte Prioritätsniveau oder Daten zur Berechnung des mit jedem Kanaltyp verknüpften Prioritätsniveaus umfasst.

3. Mobiles Endgerät nach Anspruch 1 oder 2, **dadurch gekennzeichnet, dass** die Anwendung ein Anmeidemodul oder beziehungsweise ein Abmeldemodul umfasst, das seine Anmeldung oder beziehungsweise seine Abmeldung bei der Verwaltungsvorrichtung bei einer Aktivierung oder beziehungsweise einer Deaktivierung dieser Anwendung erlaubt, oder das Anmeldemodul der Anwendung führt seine Anmeldung bei der Verwaitungsvorrichtung bei einer Installation dieser Anwendung im mobilen Endgerät durch.

4. Mobiles Endgerät nach einem der Ansprüche 1 bis 3, **dadurch gekennzeichnet, dass** das Zuweisungsmodul ein Initialisierungs- und Aktualisierungsmodul (M5) gespeicherter Daten umfasst, die für Leistungskennziffern jedes der hergestellten Kanäle repräsentativ sind, wobei die Leistungskennziffern umfassen:

- einen Antwortzeitparameter für eine Abfrage einer entfernten Ressource über diesen Kommunikationskanal, oder
- einen Qualitätskennzifferparameter, der dem Kehrwert der Antwortzeit entspricht, oder

- einen Parameter des für die Abfrage der entfernten Ressource über diesen Kommunikationskanal notwendigen Energieverbrauchs oder
- einen Parameter des Quotienten der Qualitätskennziffer durch den Energieverbrauch,

wobei ein Vergleich der Leistungskennziffern mehrerer verfügbarer, mit der Anwendung kompatibler Kanäle gemäß mindestens einem Parameter eine verhältnismäßige Gewichtung der Prioritätsniveaus gegenüber den Leistungskennziffern erlaubt, um den Kanal zu bestimmen, der das höchste gewichtete Prioritätsniveau hat, der demzufolge der Anwendung zugewiesen wird.

5. Mobiles Endgerät nach Anspruch 4, **dadurch gekennzeichnet, dass** jeder der hergestellten Kanäle mindestens einen Zustand einer Vielzahl möglicher Zustände hat, nämlich:

- einen Transaktionszustand (E04), bei dem Nachrichten mit der Außenwelt des mobilen Endgeräts ausgetauscht werden können, nach
- einem Verbindungszustand (E03), bei dem Adressdaten in einem Netzwerk in Verbindung mit Hardware-Kennwortdaten gespeichert werden, nach
- einem Authent.ifizierungszustand (E02), bei dem Authentifizierungsnachnchten ausgetauscht werden, nach
- einem Abtastzustand (E01), bei dem Zugangspunkte oder Funkfrequenz-Verbindungsstationen des Kanals ermittelt werden, nach
- einem Deauthentifizierungszustand (E06), nach
- einem die Verbindung aufhebenden Zustand (E05), nach dem Transaktionszustand (E04),

wobei bei jedem Zustandswechsel dieses Kanals eine Aktualisierung der sich auf einen Kanal beziehenden Leistungskennziffern durchgeführt wird.

6. Mobiles Endgerät nach Anspruch 5, **dadurch gekennzeichnet, dass** die Leistungskennziffern anhand der gespeicherten Zeiten (T01, T12, T02, T23) und der gespeicherten Energieaufwendungen (w01, w12, w02, w23) berechnet werden, die den Verbleiben in den aufeinanderfolgenden Zuständen und den Sprüngen zwischen den aufeinanderfolgenden Zuständen von einem aktuellen Zustand bis zur Beendigung des Transaktionszustands, nach dem die Abfrage der entfernten Ressource validiert wird, entsprechen.

7. Mobiles Endgerät nach Anspruch 6, **dadurch gekennzeichnet, dass** die Zeiten (T01, T12, T02, T23) und die Energieaufwendungen (w01, w12, w02, w23), die den Verbleiben in den aufeinanderfolgenden Zuständen und den Sprüngen zwischen den aufeinanderfolgenden Zuständen entsprechen, während einer Testphase jedes hergestellten Kanals von einem Testmodul gemessen und gespeichert werden.

8. Mobiles Endgerät nach Anspruch 6 oder 7, **dadurch gekennzeichnet, dass** die Verwaltungsvorrichtung ein Kanaloptimierungsmodul umfasst, das die Zustände der Kanäle so nah wie möglich am Transaktionszustand einstellt oder das einen oder mehrere Kanäle im Transaktionszustand (E04) belässt, wobei der Transaktionszustand bei Inaktivität im Transaktionszustand belassenen Kanal durch periodisches Verschicken von Aktiverhaltungsbefehlen wie zum Beispiel des Befehls "keep alive" aufrechterhalten wird.

9. Mobiles Endgerät nach einem der Ansprüche 5 bis 8, **dadurch gekennzeichnet, dass** die mit der Anwendung kompatiblen Kommunikationskanaltypen jeweils gemäß ihrem Prioritätsniveau verknüpft sind, das in der Prioritätentabelle der Verwaltungsvorrichtung (ACM1) gespeichert ist, wobei jedes Prioritätsniveau mindestens entspricht:

- einem optimalen Funktionsmodus der Anwendung, der einer höchsten Priorität für die Zuweisung dieses Kanaltyps durch das Zuweisungsmodul entspricht, oder
- einem abgeschwächten Funktionsmodus der Anwendung, der einer mittleren Priorität für die Zuweisung dieses Kanaltyps durch das Zuweisungsmodul entspricht, oder
- einem minimalen Funktionsmodus, der einer niedrigsten Priorität für die Zuweisung dieses Kanaltyps durch das Zuweisungsmoduf entspricht,

wobei die Verwaltungsvorrichtung als Antwort auf die Eintragungsnachricht eine Anschlussantwort an einen Kanal zurückschickt, der gemäß einem in Bezug auf die angefragten Kanaltypen optimalen, abgeschwächten oder minimalen Modus bestimmt wird oder eine Antwort an einen Kanal, dass der Anschluss unmöglich ist, wobei die Verwaltungsvorrichtung der Anwendung Befehle übermittelt, zu einem anderen Kanal zu wechseln, der es erlaubt, den abgeschwächten oder minimalen Kommunikationsmodus der Anwendung infolge einer Änderung der Zustände der vom mobilen Endgerät eingerichteten Kanäle zu verbessern.

10. Mobiles Endgerät nach einem der Ansprüche 5 bis 9, **dadurch gekennzeichnet, dass** die Verwaltungsvorrichtung ein Lokalisierungsmodul (M_loc) umfasst, das repräsentative Daten mindestens eines Netzverbindungspunktes, der mit dem gespeicherten Kennwort der Anwendung verknüpft ist, umfasst, wobei das Lokalisierungsmodul die Kanäle im Transaktionszustand kontrolliert und dem Zuweisungsmodul bei Teststellung dieses Verbindungspunktes in einem der Kanäle im Transaktionszustand einen Umschaltbefehl der Kommunikationen der verknüpften Anwendung über diesen Kanal übermittelt

11. Mobiles Endgerät nach Anspruch 10, **dadurch gekennzeichnet, dass** die Verwaltungsvorrichtung ein Tarifizierungsmodul (M_tar) umfasst, das repräsentative Daten mindestens eines bestimmten Kommunikationsnetzwerks umfasst, das verknüpft ist mit:

   - dem gespeicherten Kennwort eines Benutzers des mobilem Endgeräts oder
   - einem Nutzungszähler oder
   - einem maximalen Grenzwert des Nutzungszählers,

12. Mobiles Endgerät nach Anspruch 11, **dadurch gekennzeichnet, dass** beim Empfang einer Nachricht, die den Netzanschluss bestätigt, ein Inkrementierungsmodul des Nutzungszählers von der Anwendung aktiviert wird, wobei das Inkrementierungsmodul beim Empfang einer Nachricht, die die Netzunterbrechung bestätigt, von der Anwendung deaktiviert wird, wobei diese Bestätigungsnachrichten von der Anwendung geschickt werden, wobei das Tarifierungsmodul bei Ermittlung eines Werts des Nutzungszählers, der einen maximalen Grenzwert erreicht oder überschreitet, die Übertragung eines Unterbrechungsbefehls des mit dem Nutzungszähler vernetzten Kanals an das Zuweisungsmodul auslöst, wobei der maximale Grenzwert und der Nutzungszähler in Abhängigkeit von den gespeicherten Daten initialisiert oder aktualisiert werden, die für ein Benutzerabönnernent repräsentativ sind.

13. Kommunikationsvervvaltungsverfahren in einem mobilen Endgerät, das Komponenten (A2G, Int01, A3G, Int02, AWIFI, Int03) zur Kommunikation mit der Außenwelt des mobilen Endgeräts umfasst und eine Verwaltungsvorrichtung (ACM1) der Verbindungen, die ein Modul zur Herstellung oder Unterdrückung von Kommunikationskanälen zwischen der Außenwelt des mobilen Endgeräts und mindestens einer internen Anwendung (App1, Appx) des mobilen Endgeräts umfasst, wobei die über mehrere Protokolischichten eingerichteten Kanäle (CA1, CAx) von der VerwaStungsvorrichtung gesteuert werden, **dadurch gekennzeichnet, dass** es umfasst:

   - einen Schritt (ETp41) des Versands einer Anmeldeanfrage an die Verwallungsvorrichtung von einem Anmeidemodul der Anwendung, wobei die Anmeldeanfrage, die über einen vorbestimmten Verwalturigs-Softwarebus (B0) geschickt wird, der einerseits mit einer Schnittstelle der Verwaltungsvorrichtung und andererseits mit einer Schnittstelle der Anwendung kommuniziert, ein Kennwort der Anwendung und repräsentative Daten eines oder mehrerer bestimmter Kommunikationskanaltypen umfasst, die mit der Anwendung kompatibel sind,
   - einen Schritt der Anmeldung des Kennworts der Anwendung und des oder der Kanaltypen, die mit jedem verknüpft sind, von denen ein gespeichertes Prioritätsniveau verknüpft ist, in einer Prioritätentabelle,
   - einen Schritt der Antwort auf die Anmeldeanftage durch ein Zuweisungsmodul einer der eingerichteten Kanäle an die Anwendung, wobei der der Anwendung zugewiesene Kanal einem der Kanaltypen entspricht, die mit der Anwendung in der Prioritätentabelle verknüpft sind.

14. Verfahren nach Anspruch 13, **dadurch gekennzeichnet, dass** das Zuweisungsmodul ein Initialisierungs- und Aktualisierungsmodul (M5) gespeicherter Daten umfasst, die für Leistungskennziffern jedes der eingerichteten Kanäle repräsentativ sind, wobei die Leistungskennziffern umfassen:

   - einen Antwortzeitparameter für eine Abfrage einer entfernten Ressource über diesen Kommunikationskanal, oder
   - einen Qualitätskennzifferparameter, der dem Kehrwert der Antwortzeit entspricht, oder
   - einen Parameter des für die Abfrage der entfernten Ressource über diesen Kommunikationskanal notwendigen Energieverbrauchs oder
   - einen Parameter des Quotienten der Qualitätskennziffer durch den Energieverbrauch,

wobei das Verfahren einen Schritt der Gewichtung durch mindestens eine der Leistungskennziffern mehrerer verfügbarer, mit der Anwendung kompatibler Kanäle umfasst, wodurch ein Vergleich der gewichteten Prioritätsniveaus ermöglicht wird, um den Kanal mit dem höchsten gewichteten Prioritätsniveau zu bestimmen, der der Anwendung zugewiesen wird.

15. Verfahren nach Anspruch 14, **dadurch gekennzeichnet, dass** jeder der hergestellten Kanäle mindestens einen Zustand aus einer Vielzahl möglicher Zustände hat, darunter einen Transaktionszustand (E04), bei dem Nachrichten mit der Außenwelt des mobilen Endgeräts austauschbar sind, nach einem Verbindungszustand (E03), bei dem Adressdaten in einem Netz in Verbindung mit Hardware-Kennwortdaten gespeichert werden, nach einem Authentifizierungszustand (E02), bei dem Aüthentifizierungsnachrichten ausgetauscht werden, nach einem Abtastzustand (E01), bei dem Zugangspunkte oder Funkfrequenz-Verbindungsstationen des Kanals ermittelt werden, nach einem Deauthentifizierungszustand (E06), nach einem die Verbindung aufhebenden Zustand (E05), nach dem Transaktionszustand (E04), wobei das Verfahren umfasst:

- einen Mess- und Speicherschritt der Zeiten (T01, T12, T02, T23) und der Energieaufwendungen (w01, w12, w02, w23), die den Verbleiben in den aufeinanderfolgenden Zuständen und den Sprüngen zwischen den aufeinanderfolgenden Zuständen entsprechen, eines Testmoduls,
- einen Schritt der Berechnung und der Aktualisierung der Leistungskennziffern durch Summierung der Zeiten oder der Energieaufwendungen eines aktuellen Zustands bis zur Beendigung des Transaktionszustands, nach dem eine Abfrage einer entfernten Ressource validiert ist.

Fig.1

# Fig.2

EP 2 150 090 B1

Fig.3

Etp20 ─── Début mesures

Cond20 ─ Démarrées

Etp21 ─── Association MAC/Adresse réseau local

Cond21 ─ adresse réseau local mémorisée

Etp22 ─── Détermination d'une adresse réseau distante

Cond22 ─ adresse réseau distant mémorisée

Etp23 ─── Ouverture d'un point d'accès

Cond23 ─ point d'accès ouvert

Etp24 ─── Accès à une ressource distante

Cond24 ─ ressource reçue par le terminal

Etp25 ─── Fin des mesures

Cond25 ─ indices mis à jour        Etp26

Temporisation avant fermeture du point d'accès

Cond261 ─ requête d'accès détectée

Etp27 ─── Utilisation du point d'accès

Cond27 ─ fin d'utilisation

Cond262 ─ fin de temporisation

Etp28 ─── Fermeture du point d'accès

# Fig.5

| Etat connexion CA1 | Energie dépensée | Délai écoulé |
|---|---|---|
| Maintien E01 | w01 | T01 |
| Transition E01 vers E02 | w12 | T12 |
| Maintien E02 | w02 | T02 |
| Transition E02 vers E03 | w23 | T23 |
| Maintien E03 | w03 | T03 |
| Transition E03 vers E04 | w34 | T34 |
| Maintien E04 | w04 | T04 |
| Transition E04 vers E05 | w45 | T45 |
| Maintien E05 | w05 | T05 |
| Transition E05 vers E06 | w56 | T56 |
| Maintien E06 | w06 | T06 |
| Transition E06 vers E01 | w61 | T61 |

# Fig.6

Fig.4

# Fig.7

| Nom de Commande | Id Applicatif | Id canal | Tarification | Sécurité | Niveau d'authentification | Bande passante |
|---|---|---|---|---|---|---|
| Démarre | | | Gratuit | sécurisé | authentifié par le réseau | |
| Arrêt | | | Volume | non sécurisé | | |
| Bascule | | | Session | | non authentifié | |
| | | | Temps | | | |

← Champs

← Différents types

EP 2 150 090 B1

# Fig.8

| Nom de Commande | Id canal | Tarification |
|---|---|---|
| Démarre | | Gratuit |
| Arrêt | | Volume |
| | | Session |
| | | Temps |

← Champs

← Différents types

Etp40 — Activation de l'applicatif

Cond40 — activé

Etp41 — Envoi d'une requête d'enregistrement

Cond41 — requête envoyée

Etp42 — Réception de la requête d'enregistrement

Cond42 — requête reçue mémorisée

Etp43 — Mise à jour du module d'adressage

Cond43 — mémorisé

Etp44 — Transmission de données représentatives de l'ensemble des canaux

Cond44 — envoyées

Etp45 — Envoi d'un message fonction d'un ou plusieurs évènements

Cond45 — envoyé

Etp46 — Réception et traitement du message

Cond46 — traité

Etp50 — Envoi d'une requête de désenregistrement de l'applicatif

Cond50 — envoyé

Etp51 — Désactivation de l'applicatif et Réception de la requête par le module de gestion

Cond51 — requête reçue par le module de gestion

Etp52 — Mise à jour du module d'adressage

Cond52 — mémorisé

# Fig.9

# Fig.10

M_adr

Gest_adr

| ID_App1 | |
|---|---|
| - - - | |
| ID_Appx | |

# Fig.11

M_loc

Gest_loc

| ID point d'accès | ID application |
|---|---|
| ID_Sta1 | ID_App1 |
| ID_Acc_point1 | ID_Appx |

# Fig.12

M_tar

Gest_tar

| Struct1 | { X1, X2, X3 ;<br>ID_Appx ;<br>Compt = 70 ;<br>Max_Compt = 100 } |
|---|---|

# Fig.13

M_prior

Gest_Prior

| Id Applicatif | Types de canaux | Priorité | Login/Mot de Passe |
|---|---|---|---|
| ID_App1 | CA1 | 10 | login1/pwd1 |
| ID_Appx | CAx | 10 | - |
| ID_App1 | CA2 | 0 | - |

**EP 2 150 090 B1**